# EUROPEAN PATENT APPLICATION

(11) **EP 4 742 799 A1**
(43) Date of publication of application: **13.05.2026**
(21) Application number: 24850496.1
(22) Date of filing: 13.03.2024
(51) Int. Cl.: H04W 72/21, H04W 72/0446, H04W 72/23

(54) **DATA TRANSMISSION METHOD AND APPARATUS, AND DEVICE AND SYSTEM**

(30) Priority: 10.08.2023 CN 202311011326
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Gill Jennings & Every LLP
(86) International application number: PCT/CN2024/081532
(87) International publication number: WO 2025/030836

(57) **Abstract**

This application provides a data transmission method and apparatus, a device, and a system. In the data transmission method, a terminal device may repeatedly send a first data unit at an available transmission occasion TO within a configured grant CG periodicity, where the first data unit is a last data unit or multiple data units in a plurality of data units continuously sent within the CG periodicity, and the CG periodicity includes a plurality of available TOs consecutive in time domain. In the foregoing method, the terminal device repeatedly sends only the last data unit or the multiple data units within the CG periodicity, to achieve an objective of both reliability of data transmission and not affecting a system capacity. In addition, because the terminal device repeatedly sends the last data unit or the several data units, a network device may not schedule a hybrid automatic repeat request HARQ for the last data unit or the multiple data units, to reduce system signaling interaction.

## Description

This application claims priority to Chinese Patent Application No. 202311011326.X, filed with the China National Intellectual Property Administration on August 10, 2023 and entitled "DATA TRANSMISSION METHOD AND APPARATUS, DEVICE, AND SYSTEM", which is incorporated herein by reference in its entirety.

### TECHNICAL FIELD

This application relates to the field of communication technologies, and in particular, to a data transmission method and apparatus, a device, and a system.

### BACKGROUND

In a wireless communication system, an extended reality (extended reality, XR) technology has features such as multi-view angles and strong interactivity, can provide brand new experience for a user, and has great application value and commercial potential. XR includes technologies such as augmented reality (augmented reality, AR), virtual reality (virtual reality, VR), and mixed reality (mixed reality, MR). XR data is usually transmitted in a form of an image frame.

XR data usually has a specific frame rate and periodicity. Therefore, a configured grant (configured grant, CG) is applicable to transmission of such periodic XR data. A terminal may send XR data on a plurality of available TOs within one CG periodicity based on a CG periodicity configured by a network and a plurality of available transmission occasions (transmission occasions, TOs) within the CG periodicity. How the terminal repeatedly sends the XR data on the plurality of available TOs within one CG periodicity is a problem TO be urgently discussed at present.

### SUMMARY

Embodiments of this application provide a data transmission method and apparatus, a device, and a system, to improve reliability and transmission efficiency of data transmission.

According to a first aspect, an embodiment of this application provides a data transmission method. The method may be applied to a terminal device, and includes: repeatedly sending a first data unit at an available transmission occasion TO within a configured grant CG periodicity, where the first data unit is a last data unit or multiple data units in a plurality of data units continuously sent within the CG periodicity, the CG periodicity includes N available TOs consecutive in time domain, and N is a positive integer greater than 1.

In this embodiment, the terminal device repeatedly sends only the last data unit or the multiple data units within the CG periodicity, to achieve an objective of both reliability of data transmission and not affecting a system capacity. In addition, because the terminal device repeatedly sends the last data unit or the several data units, a network device may not schedule a hybrid automatic repeat request HARQ for the last data unit or the multiple data units, and only schedules an HARQ for first several data units within the CG periodicity, to reduce system signaling interaction and improve data transmission efficiency.

In an optional embodiment of the first aspect, the data unit is a physical uplink shared channel PUSCH.

In this embodiment, that the data unit is a PUSCH may also be described as: the data unit is sent on the PUSCH, or the data unit is carried on the PUSCH. That the terminal device repeatedly sends the last data unit or the several data units may be described as: the terminal device repeatedly sends a last PUSCH or several PUSCHs.

In an optional embodiment of the first aspect, the data transmission method further includes: receiving configuration information from the network device, where the configuration information is used to configure related information of a data unit repeatedly sent by the terminal device within the CG periodicity.

In this embodiment, the configuration information delivered by the network device to the terminal device may be used to indicate the terminal device to repeatedly send uplink data within the CG periodicity. In this way, the terminal device may repeatedly send the uplink data at one available TO or a plurality of available TOs within the CG periodicity based on the configuration information, to improve reliability of data transmission.

In an optional embodiment of the first aspect, the configuration information is first configuration information; the first configuration information includes index information of the data unit repeatedly sent within the CG periodicity, and a quantity of sending times of the data unit repeatedly sent; and the index information is used to indicate the last data unit or the multiple data units.

In an optional embodiment of the first aspect, the repeatedly sending a first data unit at an available transmission occasion TO within a configured grant CG periodicity includes: repeatedly sending the first data unit at the available TO within the CG periodicity based on the first configuration information, where the first data unit is the last data unit or the multiple data units configured in the first configuration information.

In this embodiment, the network device delivers the first configuration information to the terminal device. The first configuration information indicates that the terminal device may repeatedly send the last data unit or the multiple data units within the CG periodicity and the quantity of sending times of the data unit repeatedly sent. The terminal device directly repeatedly sends the last data unit or the multiple data units based on the first configuration information. The network device decodes the last data unit or the multiple data units repeatedly sent, and a decoding success rate is higher.

In an optional embodiment of the first aspect, the configuration information is second configuration information; the second configuration information includes first indication information and a quantity of sending times of the data unit repeatedly sent; and the first indication information is used to indicate that the terminal device is allowed to repeatedly send the data unit within the CG periodicity.

In an optional embodiment of the first aspect, the repeatedly sending a first data unit at an available transmission occasion TO within a configured grant CG periodicity includes: determining the first data unit based on the quantity of sending times of the data unit repeatedly sent in the second configuration information, to-be-sent data volume within the CG periodicity, and the available TO within the CG periodicity; and repeatedly sending the first data unit at the available TO within the CG periodicity.

In this embodiment, the terminal device dynamically determines, based on to-be-sent data volume and network configuration of the terminal device, how to repeatedly send a data unit.

In an optional embodiment of the first aspect, the configuration information is carried in radio resource control RRC.

In an optional embodiment of the first aspect, the data transmission method further includes: sending second indication information to the network device, where the second indication information is used to indicate whether there is repeated sending of a data unit within a reporting periodicity.

In this embodiment, the terminal device sends the second indication information to the network device, so that the network device learns, with reference to configuration information of the network device, which available TOs within the reporting periodicity have data units repeatedly sent. In this way, the network device may not schedule an HARQ for the data unit repeatedly sent, to reduce signaling overheads.

In an optional embodiment of the first aspect, the sending second indication information to the network device includes: sending the second indication information to the network device at one available TO or a plurality of available TOs within the reporting periodicity.

In this embodiment, the network device can learn, based on the second indication information, which available TOs have repeated sending of data and which data units at available TOs are a pair of repeated data units within the reporting periodicity, to perform joint decoding on data. In addition, the network device can further promptly schedule HARQ retransmission for a data unit that fails to be decoded in data units that are not repeatedly sent, without having to wait for all data units to be transmitted once before scheduling HARQ retransmission. This can improve data transmission efficiency.

In an optional embodiment of the first aspect, the sending the second indication information to the network device at a plurality of available TOs within the reporting periodicity includes: sending the second indication information to the network device at each of the plurality of available TOs within the reporting periodicity.

In an optional embodiment of the first aspect, the second indication information is carried in uplink control information UCI.

In an optional embodiment of the first aspect, the second indication information includes P bits, P is a positive integer greater than 1, and the P bits are used to indicate use statuses of P available TOs within the reporting periodicity; and if a last bit or multiple bits in the P bits are a first value, the second indication information is used to indicate that there is repeated sending of a data unit within the reporting periodicity.

In this embodiment, whether the terminal device repeatedly sends a data unit within the reporting periodicity is implicitly indicated by using a tail bit in the second indication information.

In an optional embodiment of the first aspect, the sending second indication information to the network device includes: sending the second indication information to the network device at a first available TO, where the first available TO is an i^{th} available TO within the reporting periodicity, and i is a positive integer greater than 1. The second indication information includes P bits, an i^{th} bit in the P bits is used to indicate a use status of the first available TO, and at least one of first (i-1) bits is used to indicate whether there is repeated sending of a data unit within the reporting periodicity.

In this embodiment, whether the terminal device repeatedly sends a data unit within the reporting periodicity is explicitly indicated by using a change status of a bit previous to a bit corresponding to a currently available TO in the second indication information reported at the currently available TO (that is, the first available TO).

In an optional embodiment of the first aspect, an (i-1)^{th} bit in the P bits in the second indication information is used to indicate whether there is repeated sending of a data unit at the first available TO; and if a value of the (i-1)^{th} bit is flipped, the second indication information is used to indicate that there is repeated sending of a data unit at the first available TO.

In this embodiment, whether the terminal device repeatedly sends a data unit at the current available TO is explicitly indicated by using the change status of the bit previous to the bit corresponding to the current available TO in the second indication information reported at the current available TO (that is, the first available TO).

In an optional embodiment of the first aspect, the first (i-1) bits in the P bits in the second indication information are used to indicate whether there is repeated sending of a data unit at last x available TOs within the reporting periodicity, and x is a positive integer less than or equal to (i-1); and if values of x bits in the first (i-1) bits are flipped, the second indication information is used to indicate that there is repeated sending of a data unit at the last x available TOs within the reporting periodicity.

In this embodiment, whether the terminal device repeatedly sends a data unit at a last available TO or multiple available TOs within the reporting periodicity is explicitly indicated by using a change status of one or more bits previous to the bit corresponding to the current available TO in the second indication information reported at the current available TO (that is, the first available TO).

In an optional embodiment of the first aspect, the second indication information includes (Y+m) bits, Y is a positive integer, and first Y bits in the (Y+m) bits are used to indicate use statuses of Y available TOs within the reporting periodicity; last m bits in the (Y+m) bits are used to indicate whether there is repeated sending of a data unit within the reporting periodicity, m is determined based on a quantity of data units repeatedly sent within the CG periodicity configured in the first configuration information, and m is a positive integer; and if the last m bits in the (Y+m) bits are a first value, the second indication information is used to indicate that there is repeated sending of a data unit at last m available TOs within the reporting periodicity.

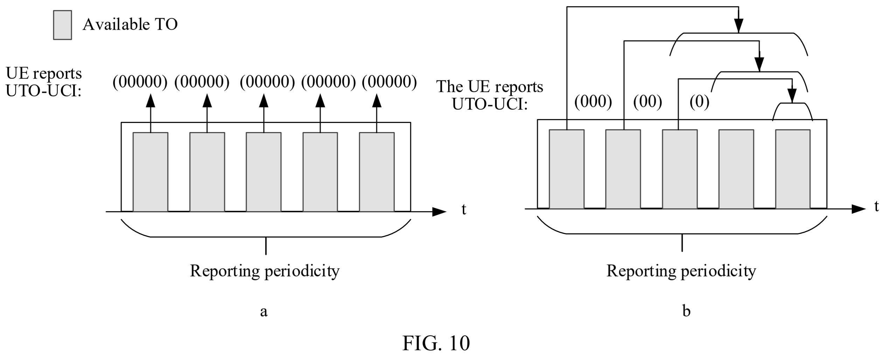

In an example, Y=P. In another example, Y==P-i-offset, where i indicates a number of the current TO at which the second indication information is sent within the reporting periodicity, offset indicates an offset (referring to b in FIG. 10) between the current available TO and a nearest available TO indicated by the second indication information sent at the current TO, and P indicates a quantity of available TOs within the reporting periodicity.

In this embodiment, whether the terminal device repeatedly sends a data unit at the last available TO or the multiple available TOs within the reporting periodicity is explicitly indicated by using one or more bits added to the second indication information.

In an optional embodiment of the first aspect, the reporting periodicity is one or more CG periodicities; and if the reporting periodicity is one CG periodicity, P is equal to N; or if the reporting periodicity is a CG periodicities, P is equal to a*N, and a is a positive integer greater than 1.

In an optional embodiment of the first aspect, the available TO includes a slot and/or a symbol used for uplink data transmission.

According to a second aspect, an embodiment of this application provides a data transmission method. The method may be applied to a network device, and includes: repeatedly receiving a first data unit at an available transmission occasion TO within a configured grant CG periodicity, where the first data unit is a last data unit or multiple data units in a plurality of data units continuously sent by a terminal device within the CG periodicity, the CG periodicity includes N available TOs consecutive in time domain, and N is a positive integer greater than 1.

In an optional embodiment of the second aspect, the data unit is a physical uplink shared channel PUSCH.

In an optional embodiment of the second aspect, the data transmission method further includes: sending configuration information to the terminal device, where the configuration information is used to configure related information of a data unit repeatedly sent by the terminal device within the CG periodicity.

In an optional embodiment of the second aspect, the configuration information is first configuration information; the first configuration information includes index information of the data unit repeatedly sent within the CG periodicity, and a quantity of sending times of the data unit repeatedly sent; and the index information is used to indicate the last data unit or the multiple data units.

In an optional embodiment of the second aspect, the configuration information is second configuration information; the second configuration information includes first indication information and a quantity of sending times of the data unit repeatedly sent; and the first indication information is used to indicate that the terminal device is allowed to repeatedly send the data unit within the CG periodicity.

In an optional embodiment of the second aspect, the configuration information is carried in radio resource control RRC.

In an optional embodiment of the second aspect, the data transmission method further includes: receiving second indication information from the terminal device, where the second indication information is used to indicate whether there is repeated sending of a data unit within a reporting periodicity.

In an optional embodiment of the second aspect, the receiving second indication information from the terminal device includes: receiving the second indication information from the terminal device at one available TO or a plurality of available TOs within the reporting periodicity.

In an optional embodiment of the second aspect, the receiving the second indication information from the terminal device at one available TO or a plurality of available TOs within the reporting periodicity includes: receiving the second indication information from the terminal device at each of the plurality of available TOs within the reporting periodicity.

In an optional embodiment of the second aspect, the second indication information is carried in uplink control information UCI.

In an optional embodiment of the second aspect, the second indication information includes P bits, P is a positive integer greater than 1, and the P bits are used to indicate use statuses of P available TOs within the reporting periodicity; and if a last bit or multiple bits in the P bits are a first value, the second indication information is used to indicate that there is repeated sending of a data unit within the reporting periodicity.

In an optional embodiment of the second aspect, the receiving second indication information from the terminal device includes: receiving the second indication information from the terminal device at a first available TO, where the first available TO is an i^{th} available TO within the reporting periodicity, and i is a positive integer greater than 1. The second indication information includes P bits, an i^{th} bit in the P bits is used to indicate a use status of the first available TO, and at least one of first (i-1) bits is used to indicate whether there is repeated sending of a data unit within the reporting periodicity.

In an optional embodiment of the second aspect, an (i-1)^{th} bit in the P bits in the second indication information is used to indicate whether there is repeated sending of a data unit at the first available TO; and if a value of the (i-1)^{th} bit is flipped, the second indication information is used to indicate that there is repeated sending of a data unit at the first available TO.

In an optional embodiment of the second aspect, the first (i-1) bits in the P bits in the second indication information are used to indicate whether there is repeated sending of a data unit at last x available TOs within the reporting periodicity, and x is a positive integer less than or equal to (i-1); and if values of x bits in the first (i-1) bits are flipped, the second indication information is used to indicate that there is repeated sending of a data unit at the last x available TOs within the reporting periodicity.

In an optional embodiment of the second aspect, the second indication information includes (Y+m) bits, and first Y bits in the (Y+m) bits are used to indicate use statuses of Y available TOs within the reporting periodicity; last m bits in the (Y+m) bits are used to indicate whether there is repeated sending of a data unit within the reporting periodicity, m is determined based on a quantity of data units repeatedly sent within the CG periodicity configured in the first configuration information, and m is a positive integer; and if the last m bits in the (Y+m) bits are a first value, the second indication information is used to indicate that there is repeated sending of a data unit at last m available TOs within the reporting periodicity.

In an optional embodiment of the second aspect, the reporting periodicity is one or more CG periodicities; and if the reporting periodicity is one CG periodicity, P is equal to N; or if the reporting periodicity is a CG periodicities, P is equal to a*N, and a is a positive integer greater than 1.

In an optional embodiment of the second aspect, the available TO includes a slot and/or a symbol used for uplink data transmission.

According to a third aspect, an embodiment of this application provides a data transmission apparatus, and the data transmission apparatus includes:
a sending module, configured to repeatedly send a first data unit at an available transmission occasion TO within a configured grant CG periodicity, where the first data unit is a last data unit or multiple data units in a plurality of data units continuously sent within the CG periodicity, the CG periodicity includes N available TOs consecutive in time domain, and N is a positive integer greater than 1.

According to a fourth aspect, an embodiment of this application provides a data transmission apparatus, and the data transmission apparatus includes:
a receiving module, configured to repeatedly receive a first data unit at an available transmission occasion TO within a configured grant CG periodicity, where the first data unit is a last data unit or multiple data units in a plurality of data units continuously sent by a terminal device within the CG periodicity, the CG periodicity includes N available TOs consecutive in time domain, and N is a positive integer greater than 1.

According to a fifth aspect, an embodiment of this application provides a terminal device, including a processor and a memory, where the memory stores computer-executable instructions, and the processor executes the computer-executable instructions stored in the memory, to enable the terminal device to perform the method described in any one of the first aspect.

According to a sixth aspect, an embodiment of this application provides a network device, including a processor and a memory, where the memory stores computer-executable instructions, and the processor executes the computer-executable instructions stored in the memory, to enable the network device to perform the method described in any one of the second aspect.

According to a seventh aspect, an embodiment of this application provides a communication system, including at least one terminal device and a network device, where the at least one terminal device is communicatively connected to the network device; and the at least one terminal device performs the method described in any one of the first aspect, and the network device performs the method described in any one of the second aspect.

According to an eighth aspect, an embodiment of this application provides a computer-readable storage medium, where the computer-readable storage medium stores a computer program, and the computer program, when executed by a processor, implements the method described in any one of the first aspect or the method described in any one of the second aspect.

According to a ninth aspect, an embodiment of this application provides a computer program product, where the computer program product includes a computer program, and when the computer program is run, a computer is enabled to perform the method described in any one of the first aspect or the method described in any one of the second aspect.

According to a tenth aspect, an embodiment of this application provides a chip, where the chip includes a processor, and the processor is configured to invoke a computer program in a memory, to perform the method described in any one of the first aspect or the method described in any one of the second aspect.

It may be understood that, the technical solutions of the second aspect to the tenth aspect of this application correspond to those of the first aspect of this application, and beneficial effects obtained in the aspects and the corresponding optional implementations are similar. Details are not described again.

### BRIEF DESCRIPTION OF DRAWINGS

FIG. 1 is a diagram of an architecture of a communication system according to an embodiment of this application;
FIG. 2 is a diagram of a scenario according to an embodiment of this application;
FIG. 3 is a diagram of a scenario according to an embodiment of this application;
FIG. 4 is a diagram of a scenario according to an embodiment of this application;
FIG. 5 is a diagram of a scenario according to an embodiment of this application;
FIG. 6 is a diagram of data transmission according to an embodiment of this application;
FIG. 7 is a diagram of data transmission according to an embodiment of this application;
FIG. 8 is a diagram of configuring a CG type 1 according to an embodiment of this application;
FIG. 9 is a diagram of configuring a CG type 2 according to an embodiment of this application;
FIG. 10 is a diagram of data transmission according to an embodiment of this application;
FIG. 11 is a diagram of interaction of a data transmission method according to an embodiment of this application;
FIG. 12 is a diagram of a plurality of types of data transmission according to an embodiment of this application;
FIG. 13 is a diagram of interaction of a data transmission method according to an embodiment of this application;
FIG. 14 is a diagram of interaction of a data transmission method according to an embodiment of this application;
FIG. 15 is a diagram of data transmission according to an embodiment of this application;
FIG. 16 is a diagram of data transmission according to an embodiment of this application;
FIG. 17 is a diagram of data transmission according to an embodiment of this application;
FIG. 18 is a diagram of data transmission according to an embodiment of this application;
FIG. 19 is a diagram of data transmission according to an embodiment of this application;
FIG. 20 is a diagram of data transmission according to an embodiment of this application;
FIG. 21 is a diagram of a data transmission apparatus according to an embodiment of this application;
FIG. 22 is a diagram of a data transmission apparatus according to an embodiment of this application;
FIG. 23 is a diagram of a terminal device according to an embodiment of this application; and
FIG. 24 is a diagram of a network device according to an embodiment of this application.

### DESCRIPTION OF EMBODIMENTS

Professional terms involved in embodiments of this application are first described in the following.
(1) During video compression, each frame represents a static image. During actual video compression and coding, various algorithms are used to reduce a data capacity, and an IPB frame is a most common algorithm.

I-frame: is an intra picture (intra picture), and is also referred to as a full-frame compressed coded picture. The I-frame is usually a 1^{st} frame of each GOP (a video compression technology used by the MPEG), is moderately compressed, is used as a reference point for random access, and may be used as a static image.

P-frame: is a predictive-frame (predictive-frame), is usually a coded image in which time redundant information of a previous coded frame in an image sequence is sufficiently removed to compress transmitted data volume, and is also referred to as a predictive picture.

B-frame: is a bi-directional interpolated prediction frame, is a coded image in which transmitted data volume is compressed in consideration of both a coded frame preceding a source image sequence and time redundant information between coded frames following the source image sequence, and is also referred to as a bi-directional predictive picture.

(2) Extended reality (extended reality, XR) refers to an environment that is generated by using computer technologies and wearable devices and that combines reality and virtuality and enables human-computer interaction. The extended reality includes a plurality of forms such as augmented reality (augmented reality, AR), virtual reality (virtual reality, VR), and mixed reality (mixed reality, MR).

A VR technology mainly refers to rendering of a visual scene and an audio scene, to simulate, as much as possible, sensory stimulation of visual and audio in the real world to a user. Generally, in the VR technology, the user wears an XR terminal (for example, a head-mounted device), to simulate vision and/or hearing for the user. The VR technology may further perform action tracking on the user, to update simulated visual and/or auditory content in time.

An AR technology mainly refers to providing visual and/or auditory additional information or manually generated content in a real environment perceived by a user. The user may directly obtain the real environment (for example, not perform sensing, processing, or rendering) or indirectly obtain the real environment (for example, perform transmission in a manner like a sensor), and performs further augmenting processing.

An MR technology is to insert some virtual elements into a physical scene, to provide, for a user, immersive experience that these elements are a part of a real scene.

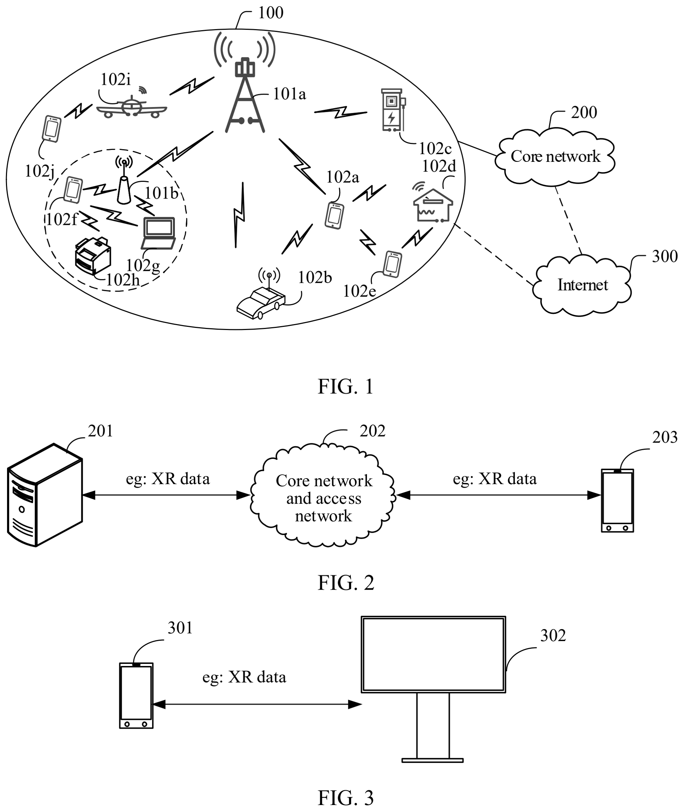

FIG. 1 is a diagram of an architecture of a communication system according to an embodiment of this application. As shown in FIG. 1, the communication system includes a radio access network 100 and a core network 200. Optionally, the communication system may further include an internet 300. The radio access network 100 may include at least one radio access network device (for example, 101a and 101b in FIG. 1), and may further include at least one terminal (for example, 102a to 102j in FIG. 1). The terminal is connected to the radio access network device in a wireless manner, and the radio access network device is connected to the core network in a wireless or wired manner. The core network device and the radio access network device may be independent and different physical devices, functions of the core network device and functions of the radio access network device may be integrated into a same device, or some functions of the core network device and some functions of the radio access network device may be integrated into one device. Terminals may be connected to each other in a wired or wireless manner and radio access network devices may be connected to each other in a wired or wireless manner. FIG. 1 is only an example. The communication system may further include other network devices, for example, a relay device and a backhaul device.

A data transmission method and apparatus, and a device provided in embodiments of this application may be applied to various communication systems, for example, a 4th generation (4^{th} generation, 4G) communication system, a 4.5 G communication system, a 5G communication system, a 5.5 G communication system, a 6G communication system, a system integrated with multiple communication systems, or a future evolved communication system. For example, the communication system may be a long term evolution (long term evolution, LTE) system, a new radio (new radio, NR) system, a wireless fidelity (wireless-fidelity, WiFi) system, a communication system related to a 3rd generation partnership project (3^{rd} generation partnership project, 3GPP) and the like, and another communication system of this type.

The radio access network device (also referred to as a network device in this application) may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, an access node in a Wi-Fi system, or the like; or may be a module or unit that implements a part of functions of the base station, for example, may be a central unit (central unit, CU) or a distributed unit (distributed unit, DU). The radio access network device may be a macro base station (for example, 101a in FIG. 1), or may be a micro base station or an indoor base station (for example, 101b in FIG. 1), or may be a relay node or a donor node. It should be understood that all or some of functions of the radio access network device in this application may also be implemented by software functions running on hardware, or by virtualization functions instantiated on a platform (for example, a cloud platform). Embodiments of this application impose no limitation on a specific technology and a specific device form used by the radio access network device. For ease of description, the following provides descriptions by using an example in which a base station is used as the radio access network device.

The terminal may also be referred to as a terminal device (terminal device), user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine type communition, MTC), an internet of things (internet of things, IOT), virtual reality, augmented reality, mixed reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a mechanical arm, a smart home device, or the like. A specific technology and a specific device form used in the terminal is not limited in embodiments of this application.

The terminal in embodiments of this application may alternatively be a VR terminal, an AR terminal, or an MR terminal. The VR terminal, the AR terminal, or the MR terminal may be referred to as an XR terminal. The XR terminal may be, for example, a head-mounted device like a helmet or glasses, an all-in-one machine, a television, a display, an automobile, an in-vehicle device, a tablet computer, a smart screen, or the like. The XR terminal may access a network in a wireless or wired manner, for example, access the network by using Wi-Fi, 5G, or another system.

The base station and the terminal may be fixed or movable. The base station and the terminal may be deployed on land, including being indoors or outdoors, handheld, or in-vehicle; or may be deployed on water; or may be deployed on a plane, a balloon, or a satellite in the air. Application scenarios of the base station and the terminal are not limited in embodiments of this application.

Roles of the base station and the terminal may be relative. For example, a plane or an uncrewed aerial vehicle 102i in FIG. 1 may be configured as a mobile base station, and for a terminal 102j accessing the radio access network 100 through 102i, the terminal 102i is a base station. However, for the base station 101a, 102i is a terminal. In other words, communication between 101a and 102i is performed according to a radio air interface protocol. Certainly, the communication between 101a and 102i may alternatively be performed according to on an interface protocol between base stations. In this case, for 101a, 102i is also a base station. Therefore, both the base station and the terminal may be collectively referred to as communication apparatuses, 101a and 101b in FIG. 1 may be referred to as communication apparatuses having a function of the base station, and 102a to 102j in FIG. 1 may be referred to as communication apparatuses having a function of the terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the application scenarios of the foregoing terminal such as a smart grid, industrial control, smart transportation, and a smart city. The function of the terminal may alternatively be performed by a module (for example, a chip or a modem) in the terminal, or may be performed by an apparatus including the function of the terminal.

In embodiments of this application, the base station sends a downlink signal or downlink information to the terminal. The downlink information is carried on a downlink channel. The terminal sends an uplink signal or uplink information to the base station. The uplink information is carried on an uplink channel.

Embodiments provided in this application are applicable to a plurality of different scenarios. FIG. 2 to FIG. 5 are diagrams of several system frameworks applicable to embodiments of this application.

FIG. 2 is a diagram of a scenario according to an embodiment of this application. A system shown in FIG. 2 includes a server 201, a core network and access network 202 (which may be briefly referred to as a transmission network 202, for example, an LTE, 5G, or 6G network), and a terminal 203. The server 201 may be configured to encode, decode, and render XR source data, the transmission network 202 may be configured to transmit XR data, and the terminal 203 provides diversified XR experience for a user by processing the XR data. It may be understood that, the transmission network 202 and the terminal 203 may further include another apparatus, for example, may further include another terminal (for example, a mobile phone, a notebook computer, or an in-vehicle terminal) and/or network device (for example, a relay device, an integrated access backhaul (integrated access backhaul, IAB) device, a Wi-Fi router, or a Wi-Fi access point). The terminal 203 obtains the XR data from the transmission network 220 by using the another terminal and/or network device.

FIG. 3 is a diagram of a scenario according to an embodiment of this application. A system shown in FIG. 3 includes a terminal 320 and another terminal 301. The another terminal 301 is a terminal other than the terminal 302. The another terminal 301 may transmit XR data to the terminal 302. For example, the another terminal 301 may cast the XR data to the terminal 302. For another example, the another terminal 301 and the another terminal 302 are in-vehicle terminals, and the in-vehicle terminals may exchange the XR data. It may be understood that the another terminal 301 may further be connected to a transmission network (for example, an LTE, 5G, or 6G network), to obtain XR data from the transmission network, or send XR data to the transmission network.

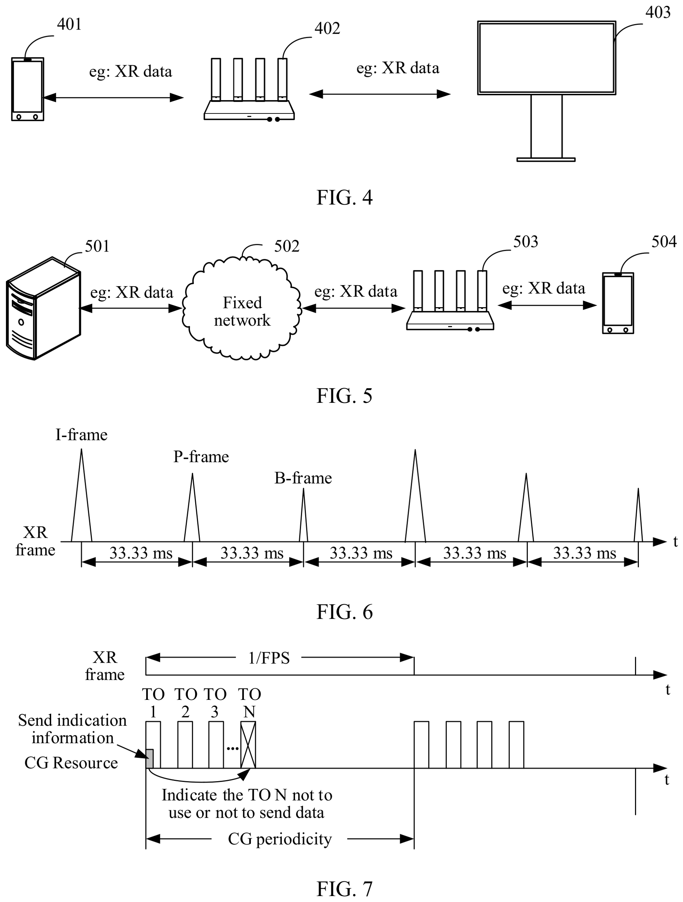

FIG. 4 is a diagram of a scenario according to an embodiment of this application. A system shown in FIG. 4 includes a terminal 401, a Wi-Fi router or a Wi-Fi access point 402 (which may be briefly referred to as a Wi-Fi apparatus 402), and another terminal 403. The another terminal 403 is a terminal other than the terminal 401. The another terminal 403 may transmit XR data to the terminal 401 by using the Wi-Fi apparatus 402. For example, the another terminal 403 is a mobile phone device, the Wi-Fi apparatus 402 is a Wi-Fi router, a Wi-Fi access point, or a set-top box, and the terminal 401 is a television device, a smart screen device, or an electronic tablet device. The mobile phone device may cast the XR data to the television device, the smart screen device, or the electronic tablet device by using the Wi-Fi router, the Wi-Fi access point, or the set-top box, to present the XR data to a user.

FIG. 5 is a diagram of a scenario according to an embodiment of this application. A system shown in FIG. 5 includes a server 501, a fixed network 502, a Wi-Fi router or a Wi-Fi access point 503 (which may be briefly referred to as a Wi-Fi apparatus 503), and a terminal 504. The server 501 may be configured to encode, decode, and render XR source data, and transmit XR data to the terminal 504 by using the fixed network 502 and the Wi-Fi apparatus 503. For example, the fixed network 502 is an operator network, the Wi-Fi apparatus 503 is a Wi-Fi router, a Wi-Fi access point, or a set-top box, and the server 501 transmits or casts the XR data to the terminal 504 by using the operator network 502 and the Wi-Fi apparatus 503.

It may be understood that FIG. 2 to FIG. 5 only provide illustrations of several scenarios to which embodiments of this application are applicable, and do not constitute a limitation on the applicable scenarios of embodiments of this application.

For ease of understanding technical solutions of this application, features of XR or video service data and a CG mechanism are first briefly described.

The XR or video service data usually has a specific frame rate and periodicity. For example, FIG. 6 is a diagram of distribution of an XR frame in time domain when a frame rate is 30 frames per second (frame per second, FPS). As shown in FIG. 6, in a case of 30 FPS, an image frame is transmitted every 1000/30≈33. 33 ms, in other words, an image frame is periodically sent. Image frames may be sequentially an I-frame, a P-frame, or a B-frame. Data volume of the I-frame, the P-frame, and the B-frame is different.

Other possible frame rates further include 60 FPS, 120 FPS, and the like. As shown in Table 1, Table 1 shows a correspondence between a frame rate and a periodicity of service data.

| | | | |
|---|---|---|---|
| Frame rate FPS of service data | 30 | 60 | 120 |
| Sending periodicity l/FPS (ms) of service data | 33.33 | 16.67 | 8.33 |

A configured grant (configured grant, CG) mechanism is a data transmission mechanism suitable for transmitting an uplink periodic service. By way of using the CG mechanism, in an uplink data transmission process, a resource (which may also be referred to as a CG resource) used for uplink data transmission may be allocated to a terminal by using a radio resource control (radio resource control, RRC) message or downlink control information (downlink control information, DCI), so that the terminal may periodically and repeatedly use the allocated resource for uplink data transmission. The CG resource may also be referred to as a CG transmission occasion (transmission occasion, TO) in time domain.

The CG mechanism includes two types: a CG type 1 and a CG type 2. The two CG types are separately introduced below.
(1) CG type 1: A base station provides related CG configuration, such as a CG periodicity and a CG resource, for a terminal by using an RRC message. The RRC message is further used for activating the CG configuration. After receiving the RRC message, the terminal may send uplink data to the base station based on the CG periodicity and the CG resource that are configured by using the RRC message.
(2) CG type 2: A base station provides related CG configuration like a CG periodicity for a terminal by using an RRC message. The base station further indicates a CG resource to the terminal by using the DCI. After receiving the DCI, the terminal may send uplink data to the base station based on the CG periodicity configured by using the RRC message and the CG resource indicated by the DCI. The DCI indicates and activates the CG resource.

As described above, the XR or video service data usually has a specific frame rate and periodicity. Therefore, the CG mechanism is suitable for transmitting such XR or video service data having a periodicity. However, the XR or video service data has large data volume and occupies a large quantity of resources. If a CG resource in a period is reserved for each terminal based on maximum service volume, a system capacity is quite limited. A simulations show that an XR scenario system can only support approximately 10 terminals. To improve a system capacity, the protocol R18 determines to enhance the CG. The following describes related content of a CG enhancement.
(1) CG enhancement manner 1: During CG configuration, within a CG periodicity, original sending on one physical uplink shared channel (physical uplink shared channel, PUSCH) is split into sending on a plurality of PUSCHs. Sending on a PUSCH may also be referred to as a CG transmission occasion TO, in other words, one TO within a single CG periodicity is split into a plurality of TOs.

For example, as shown in FIG. 7, there are N TOs having a fixed time interval within a CG periodicity, and the terminal may send uplink data, for example, XR frame data, on the N TOs.

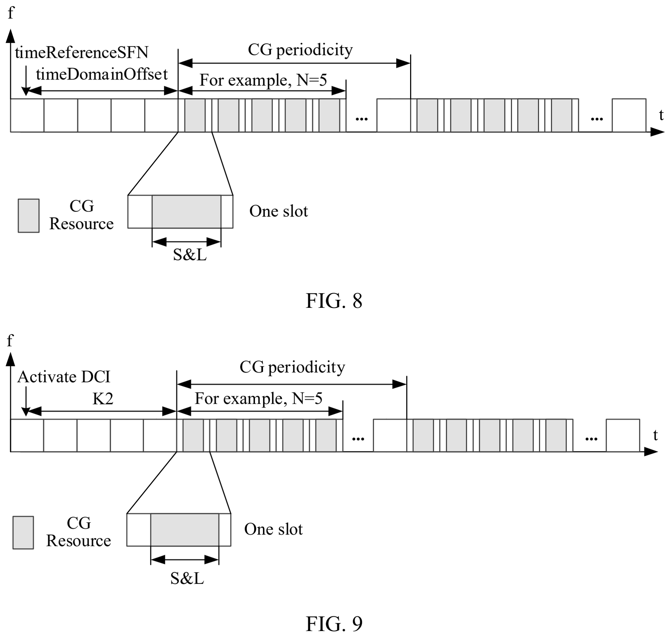

In an example, as shown in FIG. 8, in the CG type 1, the RRC message sent by the base station to the terminal includes the following configuration parameters: a CG periodicity (periodicity), a quantity N of TOs within the CG periodicity, an offset (timeDomainOffset) of a time domain resource relative to a system frame number (timeReferenceSFN), and a start symbol and a length (S&L represents start&length) of a time domain resource within a slot. Herein, M is an integer greater than 1. In this example, the terminal sends uplink data at a plurality of configured TOs based on the RRC message.

In an example, as shown in FIG. 9, in the CG type 2, the RRC message sent by the base station to the terminal includes the following configuration parameters: a CG periodicity (periodicity), and a quantity N of TOs within the CG periodicity. Activate DCI sent by the base station to the terminal include the following configuration parameters: an offset (K2) of a time domain resource relative to the Activate DCI, and a start symbol and a length (S&L represents start&length) of a time domain resource within a slot. Herein, M is an integer greater than 1. In this example, the terminal sends uplink data at a plurality of configured TOs based on the RRC message and the Activate DCI.

It should be noted that, in FIG. 8 and FIG. 9, N being 5 is used as an example. In actual application, one CG periodicity may have more or fewer TOs. This is not specifically limited in this application.

(2) CG enhancement manner 2: The terminal may dynamically indicate sending of a non-used PUSCH within a CG periodicity, or the terminal may dynamically indicate a non-used TO within a CG periodicity. In this way, the base station may dynamically allocate, to another terminal for use, resources that are sent by some PUSCHs within a CG periodicity and that are not used by a specific terminal, to improve the system capacity.

For example, as shown in FIG. 7, the terminal sends indication information at a 1^{st} TO within a CG periodicity. The indication information is used to indicate the terminal not to use an N^{th} TO within the CG periodicity. In this way, the base station may dynamically allocate, to another terminal for use, a resource at the N^{th} TO based on the indication information, to improve the system capacity.

In the CG enhancement manner 2, the terminal may use a newly defined type of uplink control information (uplink control information, UCI): UTO-UCI, to indicate a non-used PUSCH TO (briefly referred to as a TO) within a CG periodicity. The UTO-UCI may be sent a plurality of times within one CG periodicity. As shown in FIG. 7, the UTO-UCI is sent at each TO within one CG periodicity.

In an example, if previously sent UTO-UCI indicates that a TO is unused (not used or not sent), the TO cannot be modified the TO as NOT unused (used or sent) by sending the UTO-UCI. In other words, if the previously sent UTO-UCI indicates that a use/sending status of a specific TO is 1, the TO cannot be modified as 0 in the following, where 1 indicates unused, and 0 indicates NOT unused.

In an example, if a previously sent UTO-UCI indicates that a specific TO is NOT unused (used or sent), the TO may be modified as unused (not used or not sent) by sending the UTO-UCI in the following. In other words, if the previously sent UTO-UCI indicates that a use/sending status of a specific TO is 0, the TO may be modified as 1 in the following.

It can be known based on the foregoing two examples that, a TO previously indicated by the terminal to be used may or may not send uplink data. When uplink data is not sent, a TO may be re-indicated by updating the UTO-UCI. However, a TO previously indicated by the terminal to be not used cannot send uplink data.

It should be noted that the terminal indicating to use a specific TO may be understood as using the TO to send uplink data, or may be understood as reserving the TO, and uplink data may or may not be sent.

There are a plurality of manners of reporting the UTO-UCI by the terminal. The following describes the manners of reporting the UTO-UCI.

A possible reporting manner is that the terminal reports UTO-UCI at each TO within a CG periodicity, to indicate use/sending statuses of N available TOs within the CG periodicity. A length of a bit in the UTO-UCI that is used to indicate a use/sending status of a TO within the CG periodicity is a fixed length N. For example, as shown in a of FIG. 10, the terminal sends UTO-UCI at each TO within a CG periodicity. A bit length of the UTO-UCI is fixed. For example, if N is 5, 00000 indicates that the terminal uses or sends uplink data at each TO within the CG periodicity. A 1^{st} 0 indicates that uplink data is used or sent at a 1^{st} TO within the CG periodicity, a 2^{nd} 0 indicates that uplink data is used or sent at a 2^{nd} TO within the CG periodicity, and by analogy, until to a 5^{th} 0.

A possible reporting manner is that the terminal reports UTO-UCI at some TOs within a CG periodicity, to indicate use/sending statuses of some available TOs within the CG periodicity. A length of a bit in the UTO-UCI for indicating a use/sending status of a TO within the CG periodicity is lengthened. For example, as shown in b of FIG. 10, a bit length of UTO-TCI sent by the terminal at a 1^{st} TO is 3, for example, 000. A 1^{st} 0 indicates that a 3^{rd} TO within a CG periodicity is used or sent, a 2^{nd} 0 indicates that a 4^{th} TO within the CG periodicity is used or sent, and a 3^{rd} 0 indicates that a last TO within the CG periodicity is used or sent. A bit length of UTO-TCI sent by the terminal at a 2^{nd} TO is 2, for example, 00. A 1^{st} 0 indicates that the 4^{th} TO within the CG periodicity is used or sent, and a 2^{nd} 0 indicates that the last TO within the CG periodicity is used or sent. A bit length of UTO-UCI sent by the terminal at a 3^{rd} TO is 1, for example, 0, which indicates that the last TO within the CG periodicity is used or sent. In this example, offset=1, and offset may be understood as an offset between a nearest available TO indicated by second indication information sent at a current TO and the current available TO.

It can be known based on the foregoing reporting manners that a length of a bit used to indicate a use/sending status of a TO within a CG periodicity may be fixed or may be dynamically changed. The foregoing two reporting manners are merely used as examples. The terminal may use another reporting manner to indicate a use/sending status of a TO within a CG periodicity. This is not limited in this embodiment of this application.

To improve reliability of data transmission, in some embodiments, the terminal may repeatedly send uplink data within a CG periodicity. For example, as shown in FIG. 7, the terminal sends a specific XR data unit at a TO 1. If a network configures that a quantity of repeated sending times is 2, the terminal may repeatedly send the XR data unit at a TO 2. In this way, a network side may receive the XR data unit twice, and is more likely to correctly decode (recover) the XR data unit, to improve reliability of data transmission.

In some embodiments, the terminal may repeatedly send uplink data within a CG periodicity. If the network side fails to decode the uplink data, the terminal is enabled to retransmit the uplink data by scheduling a hybrid automatic repeat request (Hybrid Automatic Repeat reQuest, HARQ). It may be understood that if the terminal repeatedly sends an XR data unit at first two TOs, for example, the TO 1 and the TO 2 in FIG. 7, within the CG periodicity, a case in which the terminal retransmits the XR data unit due to a decoding failure on the network side may be reduced, to reduce signaling overheads, and improve data transmission efficiency.

It can be learned from the foregoing that one TO within a single CG periodicity is split into a plurality of TOs. Currently, whether the plurality of TOs support the terminal in repeatedly sending data remains to be discussed. A reason for supporting repeated data sending by the terminal is that an XR service requires a high latency and high reliability. In an XR data transmission process, a transmission error or a transmission timeout may occur in some data, causing an XR data transmission failure; and retransmission of the XR data may be quite late. Therefore, repeated data sending by the terminal is supported. A reason for not supporting repeated data sending by the terminal is that an XR service has large data volume, and repeated sending may affect a system capacity.

In view of this, an embodiment of this application provides a data transmission method. A solution of repeatedly sending at a plurality of TOs by a terminal within a CG periodicity is designed, to achieve an objective of both reliability of data transmission and not affecting a system capacity. Specific implementations include the following several types.
1. The terminal indicates, through network configuration, to repeatedly send some data units within a CG periodicity. The some data units may be a last data unit or several data units in a plurality of data units continuously sent within the CG periodicity. The network may further configure a quantity of repeated sending times. The quantity of repeated sending times may be understood as a quantity of sending times of sending a same data unit. For example, the quantity of repeated sending times is 2, which means that a same data unit is sent twice in total.

In this embodiment of this application, the data unit may be described as a PUSCH, and the last data unit or several data units may be described as a last PUSCH or multiple PUSCHs. It may be understood that the data unit is sent on the PUSCH, or the data unit is carried on the PUSCH. In some embodiments, the data unit may also be referred to as a data block or a transport block.

2. Based on the foregoing network configuration, the terminal dynamically determines, based on to-be-sent data volume, whether data is repeatedly sent within a CG periodicity. The terminal may indicate, by reporting UTO-UCI, whether there is repeated sending of data. Indication manners include an implicit indication manner or an explicit indication manner. For a specific indication manner, refer to the following embodiment.

The data transmission method provided in this application is described in detail below with reference to specific embodiments.

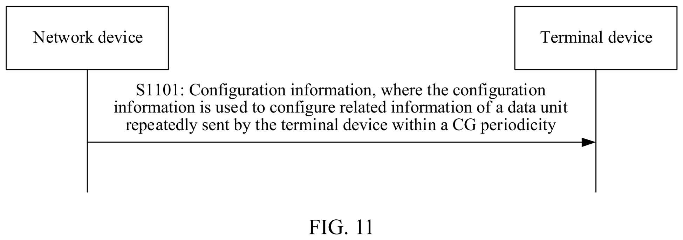

FIG. 11 is a diagram of interaction of a data transmission method according to an embodiment of this application. As shown in FIG. 11, the data transmission method includes the following step.

S1101: A network device sends configuration information to a terminal device, where the configuration information is used to configure related information of a data unit repeatedly sent by the terminal device within a CG periodicity.

In some embodiments, the configuration information is first configuration information, and the first configuration information includes index information of the data unit repeatedly sent within the CG periodicity, and a quantity of sending times of the data unit repeatedly sent. The index information is used to indicate a last unit or multiple data units. In this embodiment, a data unit for repeated sending is configured by a network. Usually, the network configures, for the terminal device, a last data unit or multiple data units in a plurality of data units continuously sent within the CG periodicity to be repeatedly sent.

The index information of the data unit repeatedly sent may also be described as index information of a PUSCH repeatedly sent. The network device may configure a last PUSCH or several last PUSCHs to be repeatedly sent, namely, repetitionPUSCHsPerCG ENUMERATED {lastOne,lastTwo} . For example, the network configures repetitionPUSCHsPerCG=lastOne, which indicates that the last PUSCH is repeatedly sent within the CG periodicity, or a last data unit in the plurality of data units sent within the CG periodicity is repeatedly sent.

The quantity of sending times of the data unit repeatedly sent may also be described as: a quantity of sending times of a PUSCH repeatedly sent, which is recorded as repetitionNum. For example, repetitionNum=2, which indicates that the data unit repeatedly sent may be sent twice.

In some embodiments, the first configuration information is carried in radio resource control RRC.

For example, the RRC configures repetitionPUSCHsPerCG=lastOne and repetitionNum=2, which indicates that the RRC configures the last PUSCH to be repeatedly sent, or the RRC configures the last data unit to be repeatedly sent, and a quantity of sending times of the last data unit repeatedly sent is 2.

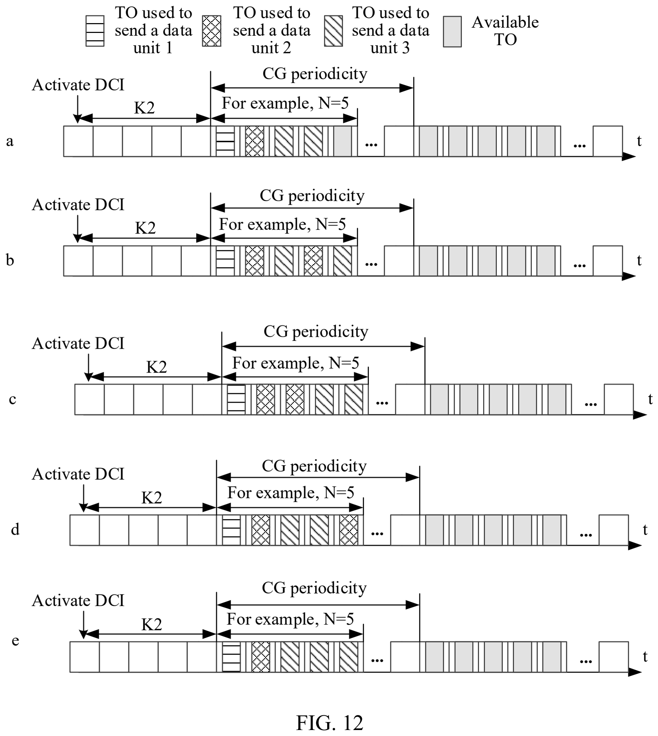

For example, as shown in a of FIG. 12, data units to be sent by the terminal device within the CG periodicity are sequentially a data unit 1 to a data unit 3. Based on the foregoing configuration, after sending the data unit 1 to the data unit 3, the terminal device repeatedly sends the data unit 3. A quantity of sending times of the data unit 3 is 2, and quantities of sending times of the data unit 1 and the data unit 2 are 1.

For example, the RRC configures repetitionPUSCHsPerCG=lastTwo and repetitionNum=2, which indicates that the RRC configures the last two PUSCHs to be repeatedly sent, or the RRC configures the last two data units to be repeatedly sent, and quantities of sending times of the last two data units repeatedly sent are both 2.

For example, as shown in b of FIG. 12, data units to be sent by the terminal device within the CG periodicity are sequentially a data unit 1 to a data unit 3. Based on the foregoing configuration, after sending the data unit 1 to the data unit 3, the terminal device repeatedly sends the data unit 2 and the data unit 3. The terminal device first repeatedly sends the data unit 2, and then repeatedly sends the data unit 3. Quantities of sending times of the data unit 2 and the data unit 3 are both 2, and a quantity of sending times of the data unit 1 is 1.

For another example, as shown in c of FIG. 12, data units to be sent by the terminal device within the CG periodicity are sequentially a data unit 1 to a data unit 3. Based on the foregoing configuration, after sending the data unit 1 and the data unit 2, the terminal device first repeatedly sends the data unit 2, then sends the data unit 3, and then repeatedly sends the data unit 3. Quantities of sending times of the data unit 2 and the data unit 3 are both 2, and a quantity of sending times of the data unit 1 is 1.

For still another example, as shown in d of FIG. 12, data units to be sent by the terminal device within the CG periodicity are sequentially a data unit 1 to a data unit 3. Based on the foregoing configuration, after sending the data unit 1 to the data unit 3, the terminal device repeatedly sends the data unit 2 and the data unit 3. The terminal device first repeatedly sends the data unit 3, and then repeatedly sends the data unit 2. Quantities of sending times of the data unit 2 and the data unit 3 are both 2, and a quantity of sending times of the data unit 1 is 1.

For example, the RRC configures repetitionPUSCHsPerCG=lastOne and repetitionNum=3, which indicates that the RRC configures the last PUSCH to be repeatedly sent, or the RRC configures the last data unit to be repeatedly sent, and a quantity of sending times of the last data unit repeatedly sent is 3.

For example, as shown in e of FIG. 12, data units to be sent by the terminal device within the CG periodicity are sequentially a data unit 1 to a data unit 3. Based on the foregoing configuration, after sending the data unit 1 to the data unit 3, the terminal device repeatedly sends the data unit 3 twice. A quantity of sending times of the data unit 3 is 3, and quantities of sending times of the data unit 1 and the data unit 2 are 1.

It should be noted that, in FIG. 12, a repeated sending solution of the terminal device is illustrated by using the CG type 2 as an example. A repeated sending solution corresponding to the CG type 1 is similar to the repeated sending solution. Refer to FIG. 12.

In some embodiments, the configuration information is second configuration information, and the second configuration information includes first indication information and a quantity of sending times of the data unit repeatedly sent.

In this embodiment, the first indication information indicates that the terminal device is allowed to repeatedly send the data unit within the CG periodicity. For example, the first indication information may be an enumeration type PartialRepetitionPerCG ENUMERATED {enabled}, and the network configures PartialRepetitionPerCG=ennable, which indicates that the terminal device is allowed (enabled) to repeatedly send a data unit within the CG periodicity. If PartialRepetitionPerCG is not configured, the terminal device is not allowed (not enabled), by default, to repeatedly send the data unit within the CG periodicity.

In this embodiment, a concept of the quantity of sending times of the data unit repeatedly sent in the second configuration information is the same as that of the quantity of sending times of the data unit repeatedly sent in the first configuration information, refer to the foregoing embodiment, and details are not described herein again.

In some embodiments, the second configuration information is carried in radio resource control RRC.

The embodiment shown in FIG. 11 shows two solutions in which related configuration information is repeatedly sent and the terminal device may perform subsequent repeated sending of data based on the configuration information.

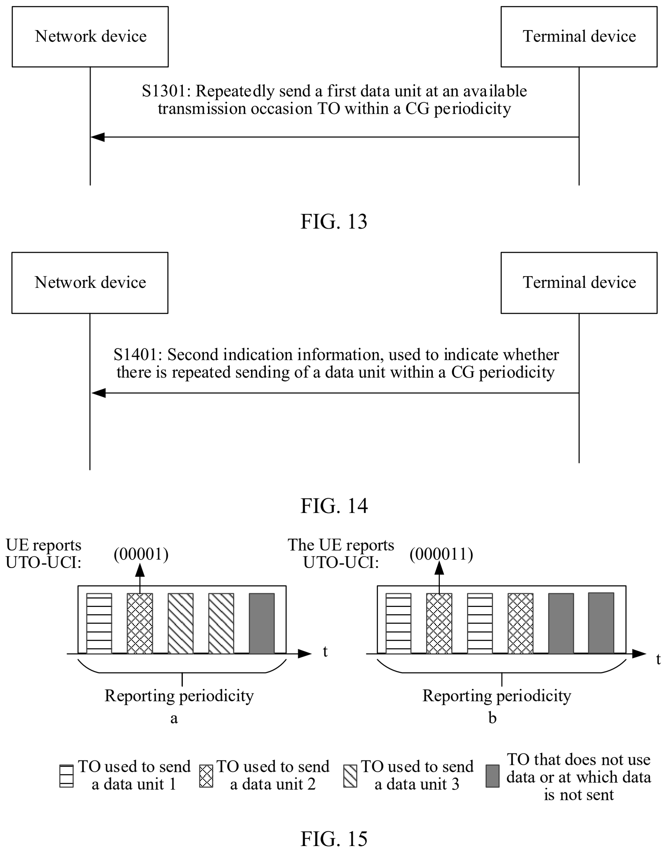

FIG. 13 is a diagram of interaction of a data transmission method according to an embodiment of this application. As shown in FIG. 13, the data transmission method includes the following step.

S1301: A terminal device repeatedly sends a first data unit to a network device at an available transmission occasion TO within a CG periodicity.

In this embodiment of this application, the first data unit repeatedly sent by the terminal device is a last data unit or multiple data units in a plurality of data units continuously sent within the CG periodicity, the CG periodicity includes N available TOs consecutive in time domain, and N is a positive integer greater than 1. The N available TOs consecutive in time domain may be N available TOs having a fixed time interval in time domain. The available TO may be understood as a transmission occasion that the terminal device may use. The terminal device may or may not perform uplink data transmission at the available TO.

In this embodiment of this application, the available TO includes a slot and/or a symbol used for uplink data transmission.

In some embodiments, before a terminal device repeatedly sends a first data unit to a network device at an available TO within a CG periodicity (S1301), the method further includes: The terminal device receives first configuration information from the network device. The first configuration information includes index information of a data unit repeatedly sent within the CG periodicity, and a quantity of sending times of the data unit repeatedly sent. Based on this, the terminal device repeatedly sends the first data unit at the available TO within the CG periodicity based on the first configuration information. The first data unit is the last data unit or the multiple data units configured in the first configuration information and used for repeated sending.

For example, if a network configures repetitionPUSCHsPerCG=lastOne and repetitionNum=2, data units to be sent within the CG periodicity are sequentially a data unit 1 to a data unit 3, and a quantity of available TOs is 5. As shown in a of FIG. 12, the terminal device repeatedly sends the data unit 3 at the 4^{th} available TO within the CG periodicity based on the network configuration. In this example, one available TO remains within the CG periodicity.

For example, if the network configures repetitionPUSCHsPerCG=lastTwo and repetitionNum=2, data units to be sent within the CG periodicity are sequentially a data unit 1 to a data unit 3, and a quantity of available TOs is 5. As shown in b of FIG. 12, based on the network configuration, the terminal device may repeatedly send the data unit 2 at the 4^{th} available TO within the CG periodicity, and repeatedly send the data unit 3 at the 5^{th} available TO. In this example, the terminal device first sends all data units once, and then repeatedly sends the last two data units based on a sending sequence of the data units.

For example, if the network configures repetitionPUSCHsPerCG=lastTwo and repetitionNum=2, data units to be sent within the CG periodicity are sequentially a data unit 1 to a data unit 3, and a quantity of available TOs is 5. As shown in c of FIG. 12, based on the network configuration, the terminal device may repeatedly send the data unit 2 at the 3^{rd} available TO within the CG periodicity, and repeatedly send the data unit 3 at the 5^{th} available TO. In this example, after determining that the last two data units are repeatedly sent, the terminal device first repeatedly sends the 1^{st} data unit that needs to be repeatedly sent, and then repeatedly sends the 2^{nd} data unit that needs to be repeatedly sent.

For example, if the network configures repetitionPUSCHsPerCG=lastTwo and repetitionNum=2, data units to be sent within the CG periodicity are sequentially a data unit 1 to a data unit 3, and a quantity of available TOs is 5. As shown in d of FIG. 12, based on the network configuration, the terminal device may repeatedly send the data unit 3 at the 4^{th} available TO within the CG periodicity, and repeatedly send the data unit 2 at the 5^{th} available TO. In this example, the terminal device first sends all data units once, and then repeatedly sends the last two data units based on a reverse order of a sending sequence of the data units.

For example, if the network configures repetitionPUSCHsPerCG=lastOne and repetitionNum=3, data units to be sent within the CG periodicity are sequentially a data unit 1 to a data unit 3, and a quantity of available TOs is 5. As shown in e of FIG. 12, the terminal device may repeatedly send the data unit 3 at the 4^{th} and 5^{th} available TOs within the CG periodicity based on the network configuration.

In this embodiment, the network configures a quantity of data units (for example, the last data unit or the multiple data units within the CG periodicity) within the CG periodicity for repeated sending and a quantity of sending times of data units repeatedly sent. The terminal device repeatedly sends some data units (for example, the last data unit or the multiple data units) within the CG periodicity based on the network configuration.

In some embodiments, before a terminal device repeatedly sends a first data unit to a network device at an available TO within a CG periodicity (S1301), the method further includes: The terminal device receives second configuration information from the network device. The second configuration information includes first indication information and a quantity of sending times of the data unit repeatedly sent. The first indication information is used to indicate that the terminal device is allowed to repeatedly send the data unit within the CG periodicity. Based on this, the terminal device determines, based on the quantity of sending times of the data units repeatedly sent, to-be-sent data volume within the CG periodicity, and the available TO within the CG periodicity in the second configuration information, the first data unit for repeated sending, and repeatedly sends the first data unit at the available TO within the CG periodicity.

For example, if the network configures PartialRepetitionPerCG=ennable and repetitionNum=2, data units to be sent within the CG periodicity are sequentially a data unit 1 to a data unit 3, and a quantity of available TOs is 5, the terminal device may determine, based on the network configuration, the to-be-sent data volume within the CG periodicity, and the available TO, that the data unit 2 and the data unit 3 may be repeatedly sent. A repeated sending manner is shown in b, c, or d of FIG. 12.

For example, if the network configures PartialRepetitionPerCG=ennable and repetitionNum=3, data units to be sent within the CG periodicity are sequentially a data unit 1 to a data unit 3, and a quantity of available TOs is 5, the terminal device may determine, based on the network configuration, the to-be-sent data volume within the CG periodicity, and the available TO, that the data unit 3 may be repeatedly sent, as shown in e of FIG. 12.

It should be noted that b, c, and d of FIG. 12 show three different repeated sending manners of a data unit. When the terminal device repeatedly sends the data unit, a specific repeated sending manner used may be agreed on by the terminal device and the network device, and the two parties perform decoding based on the agreed repeated sending manner. The repeated sending manner is not specifically limited in this embodiment of this application.

In this embodiment, the network indicates that the terminal device can repeatedly send a data unit and indicates a quantity of sending times of the data unit repeatedly sent. The terminal device may dynamically determine a quantity of data units for repeated sending within each CG periodicity based on total data volume within a CG periodicity, a quantity of sending times, and a quantity of available TOs, to repeatedly send some data units (for example, the last data unit or the multiple data units) within the CG periodicity. In other words, which of data units repeatedly sent is determined by the terminal device according to to-be-sent data volume of the terminal device, rather than configured or indicated by the network.

It may be understood that data volume of uplink data sent by the terminal device within each CG periodicity is usually different. As shown in FIG. 6, the terminal device transmits the I-frame within a 1^{st} CG periodicity, transmits the P-frame within a 2^{nd} CG periodicity, and transmits the B-frame within a 3^{rd} CG periodicity. Data volume of the I-frame, the P-frame, and the B-frame is different. Therefore, the terminal device may obtain, within each CG periodicity, data volume of to-be-sent data within the CG periodicity, and dynamically determine, with reference to the second configuration information and an available TO within the CG periodicity, a data unit (for example, a last data unit or multiple data units) used for repeated sending within the CG periodicity, to improve reliability of data transmission.

In the embodiment shown in FIG. 13, the terminal device repeatedly sends the last data unit or the multiple data units at the available TO within the CG periodicity. The network device may decode the last data unit or the multiple data units based on the last data unit or the multiple data units repeatedly sent, with a higher decoding success rate. In this way, the network device does not need to schedule, after the decoding fails, an HARQ to trigger the terminal to retransmit the last data unit or the multiple data units, to reduce signaling overheads and improve data transmission efficiency. In addition, after receiving first several data units (several data units before the last data unit or the multiple data units) sent by the terminal device, the network device may directly schedule the HARQ to trigger the terminal to retransmit a data unit that is in the first several data units and that fails to be decoded, and does not need to schedule the HARQ after waiting for transmission of all data units once. This can improve data transmission efficiency.

It can be known based on the foregoing embodiment that when the terminal device dynamically determines, based on the to-be-sent data volume of the terminal device, how to repeatedly send data, the terminal device should report, to the network device, indication information (such as second indication information below) related to repeated sending, so that the network device learns that the terminal device performs repeated sending at specific available TOs within the reporting periodicity.

The following describes a solution of sending the second indication information by the terminal device in detail with reference to the accompanying drawings.

FIG. 14 is a diagram of interaction of a data transmission method according to an embodiment of this application. As shown in FIG. 14, the data transmission method includes the following step.

S1401: A terminal device sends second indication information to a network device, where the second indication information is used to indicate whether there is repeated sending of a data unit within a reporting periodicity.

In some embodiments, the second indication information is carried in uplink control information UCI. For example, the second indication information may be carried in the foregoing UTO-UCI. In some embodiments, the reporting periodicity may also be referred to as a reporting periodicity of UTO-UCI (briefly referred to as a UTO periodicity).

In some embodiments, the terminal device sends the second indication information to the network device at one available TO or a plurality of available TOs within the reporting periodicity.

In some embodiments, that the terminal device sends the second indication information to the network device at a plurality of available TOs within the reporting periodicity may include: The terminal device sends the second indication information to the network device at each of the plurality of available TOs within the reporting periodicity.

There may be a plurality of indication manners for the second indication information sent by the terminal device. The following describes each indication manner in detail.

In a first indication manner, the second indication information includes P bits, and the P bits are used to indicate use statuses of P available TOs within the reporting periodicity; and if a last bit or multiple bits in the P bits are a first value, the second indication information is used to indicate that there is repeated sending of a data unit within the reporting periodicity. For example, the first value may be 1.

In this embodiment of this application, the reporting periodicity may be one or more CG periodicities.

In an example, if the reporting periodicity is one CG periodicity, P is equal to N. In another example, if the reporting periodicity is a plurality of CG periodicities, for example, the reporting periodicity is a CG periodicities, a is a positive integer greater than 1, and P is equal to a*N.

For example, as shown in a of FIG. 15, an example in which there are five available TOs (P=5) within a reporting periodicity is used. The terminal device sends data units 1, 2, and 3 within the reporting periodicity, and if a network configures repetitionPUSCHsPerCG=lastOne and repetitionNum=2, the terminal device may repeatedly send the data unit 3 at a 4^{th} available TO within the reporting periodicity. An example in which the second indication information is UTO-UCI is used. The terminal device may send the UTO-UCI: 00001 at a 2^{nd} available TO within the reporting periodicity, where first four bits are used to indicate that uplink data is sent at first four available TOs within the reporting periodicity, and a last bit is used to indicate that uplink data is not sent at a last available TO within the reporting periodicity. In some embodiments, the terminal device may alternatively send the UTO-UCI: 00001 at a 1^{st} available TO, a 3^{rd} available TO, or a 4^{th} available TO within the reporting periodicity (not shown in a of FIG. 15).

In the foregoing example, because the last bit in the UTO-UCI sent by the terminal device to the network device is 1, it indicates that the terminal device does not send uplink data at the last available TO within the reporting periodicity, and implicitly indicates that there are still a remaining available TO after the terminal device repeatedly sends a data unit based on the network configuration, and the network device may learn that there is a repeated sending of a data unit at the last TO used for sending data within the reporting periodicity.

For example, as shown in b of FIG. 15, an example in which there are six available TOs (P=6) within a reporting periodicity is used. The terminal device sends a data unit 1 and a data unit 2 within the reporting periodicity, and if the network configures repetitionPUSCHsPerCG =last two and repetitionNum=2, the terminal device may repeatedly send the data unit 1 and the data unit 2 respectively at a 3^{rd} available TO and a 4^{th} available TO within the reporting periodicity. An example in which the second indication information is UTO-UCI is used. The terminal device may send the UTO-UCI: 000011 at a 2^{nd} available TO within the reporting periodicity, where first four bits are used to indicate that uplink data is sent at first four available TOs within the reporting periodicity, and last two bits are used to indicate that uplink data is not sent at last two available TOs within the reporting periodicity. In some embodiments, the terminal device may alternatively send the UTO-UCI: 000011 at a 1^{st} available TO, a 3^{rd} available TO, or a 4^{th} available TO within the reporting periodicity (not shown in b of FIG. 15).

In the foregoing example, because the last two bits in the UTO-UCI sent by the terminal device to the network device are 1, it indicates that the terminal device does not send uplink data at the last two available TOs within the reporting periodicity, and implicitly indicates that there are still two remaining available TOs after the terminal device repeatedly sends a data unit based on the network configuration, and the network device may learn that there is repeated sending of a data unit at the last two TOs used for sending data within the reporting periodicity.

The first indication manner is to implicitly indicate, by using a tail bit in the second indication information, whether the terminal device repeatedly sends a data unit.

In a second indication manner, that a terminal device sends second indication information to a network device includes: The terminal device sends the second indication information to the network device at a first available TO, where the first available TO is an i^{th} available TO within the reporting periodicity, and i is a positive integer greater than 1. The second indication information includes P bits, an i^{th} bit in the P bits is used to indicate a use status of the first available TO, and at least one of first (i-1) bits in the P bits is used to indicate whether there is repeated sending of a data unit within the reporting periodicity.

In an optional embodiment of the second indication manner, an (i-1)^{th} bit (that is, a last bit in the first (i-1) bits in the P bits in the second indication information) in the P bits in the second indication information is used to indicate whether there is repeated sending of a data unit at the first available TO. If a value of the (i-1)^{th} bit is flipped, the second indication information is used to indicate that there is repeated sending of a data unit at the first available TO.

That a value of the (i-1)^{th} bit is flipped may be understood as that: the (i-1)^{th} bit in the second indication information sent at the first available TO is a first value, and the (i-1)^{th} bit in the second indication information sent at a second available TO is a second value. The second available TO is an available TO before the first available TO, the second available TO and the first available TO are two available TOs consecutive in time domain, and the first value and the second value are different values. In other words, the (i-1)^{th} bit changes from a second value of a previous available TO to a first value of a current available TO. For example, the first value is 1, and the second value is 0.

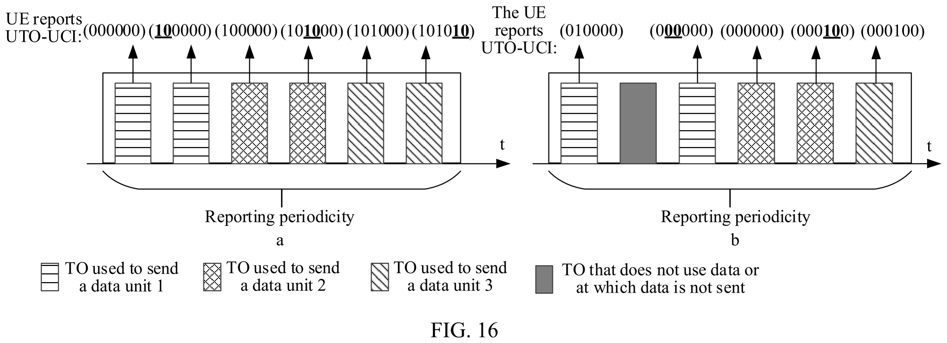

For example, as shown in a of FIG. 16, an example in which there are six available TOs (P=6) within a reporting periodicity and the second indication information is UTO-UCI is used. The terminal device sequentially sends a data unit 1 twice, a data unit 2 twice, and a data unit 3 twice within the reporting periodicity. The terminal device sends UTO-UCI: 000000 at a 1^{st} available TO within the reporting periodicity, which indicates that uplink data is sent at the six available TOs within the reporting periodicity. The terminal device sends UTO-UCI: 100000 at a 2^{nd} available TO within the reporting periodicity, where a 1^{st} bit changes from 0 (a value of a 1^{st} bit of the UTO-UCI sent at the 1^{st} available TO) to 1, in other words, the value of the 1^{st} bit is flipped, which indicates that the data unit 1 sent at the 1^{st} available TO is repeatedly sent at the 2^{nd} available TO. In this example, the UTO-UCI includes six bits. Usually, each bit is used to indicate a use status of a corresponding available TO within the reporting periodicity. For example, the terminal device sends the UTO-UCI: 000000 at the 1^{st} available TO, indicating that the terminal device sends uplink data at the six available TOs within the reporting periodicity. However, when the terminal device sends the UTO-UCI: 000000 at the 2^{nd} available TO, a 1^{st} bit 0 represents past information, and indicates that the terminal device uses the 1^{st} available TO to send uplink data. The indication has lost meaning. Therefore, the terminal device may indicate, by modifying the 1^{st} bit (from 0 to 1), to repeatedly send the uplink data of the first available TO at the second available TO within the reporting periodicity.

Based on the foregoing example, similarly, as shown in a of FIG. 16, the terminal device sends UTO-UCI: 101000 at a 4^{th} available TO within the reporting periodicity, where a 3^{rd} bit changes from 0 (a value of a 3^{rd} bit of the UTO-UCI sent by the 3^{rd} available TO) to 1, which indicates that the data unit 2 sent at the 3^{rd} available TO is repeatedly sent at the 4^{th} available TO. The terminal device sends UTO-UCI: 101010 at a 6^{th} available TO within the reporting periodicity, where a 5^{th} bit changes from 0 (a value of a 5^{th} bit of the UTO-UCI sent at a 5^{th} available TO) to 1, which indicates that the data unit 3 sent at the 5^{th} available TO is repeatedly sent at the 6^{th} available TO.

In the foregoing example, whether there is repeated sending of a data unit at a current TO is indicated by whether a value of an adjacent bit previous to a bit corresponding to the current TO in the second indication information reported at the current TO is flipped relative to that of the adjacent bit corresponding to a preceding TO (it is assumed that there is uplink data transmission at the preceding TO).

For example, as shown in b of FIG. 16, an example in which there are six available TOs (P=6) within the reporting periodicity and the second indication information is UTO-UCI. The terminal device sequentially sends a data unit 1 twice, a data unit 2 twice, and a data unit 3 once at a 1^{st} available TO and a 3^{rd} available TO to a 6^{th} available TO. The terminal device sends UTO-UCI: 010000 at the 1^{st} available TO within the reporting periodicity, which indicates uplink data is sent at five available TOs except a 2^{nd} available TO within the reporting periodicity. The terminal device sends UTO-UCI: 000000 at the 3^{rd} available TO, where a 2^{nd} bit changes from 1 (a value of the 2^{nd} bit of the UTO-UCI sent at the 1^{st} available TO) to 0, in other words, the value of the 2^{nd} bit is flipped, which indicates that the data unit 1 sent at the 1^{st} available TO is repeatedly sent at the 3^{rd} available TO (in other words, a data unit at a nearest TO before the 3^{rd} available TO is repeatedly sent at the 3^{rd} available TO). The terminal device sends a new data unit 2 at a 4^{th} available TO, and UTO-UCI sent at the 4^{th} available TO is consistent with the UTO-UCI sent at the 3^{rd} available TO. The terminal device sends UTO-UCI: 000100 at the 5^{th} available TO, where a 4^{th} bit changes from 0 (a value of the 4^{th} bit of the UTO-UCI sent at the 3^{rd} available TO) to 1, in other words, the value of the 4^{th} bit is flipped, which indicates that the data unit 2 sent at the 4^{th} available TO is repeatedly sent at the 5^{th} available TO. The terminal device sends a new data unit 3 at the 6^{th} available TO, and UTO-UCI sent at the 6^{th} available TO is consistent with the UTO-UCI sent at the 5^{th} available TO.

In the foregoing example, whether there is repeated sending of a data unit at a current TO is indicated by whether a value of an adjacent bit previous to a bit corresponding to the current TO in the second indication information reported at the current TO (the 3^{rd} available TO as shown in b of FIG. 16) is flipped relative to that of the adjacent bit corresponding to a preceding TO (it is assumed that there is no uplink data transmission at the preceding TO).

In an optional embodiment of the second indication manner, the first (i-1) bits in the P bits in the second indication information are used to indicate whether there is repeated sending of a data unit at last x available TOs within the reporting periodicity, and x is a positive integer less than or equal to (i-1); and if values of x bits in the first (i-1) bits are flipped, the second indication information is used to indicate that there is repeated sending of a data unit at the last x available TOs within the reporting periodicity.

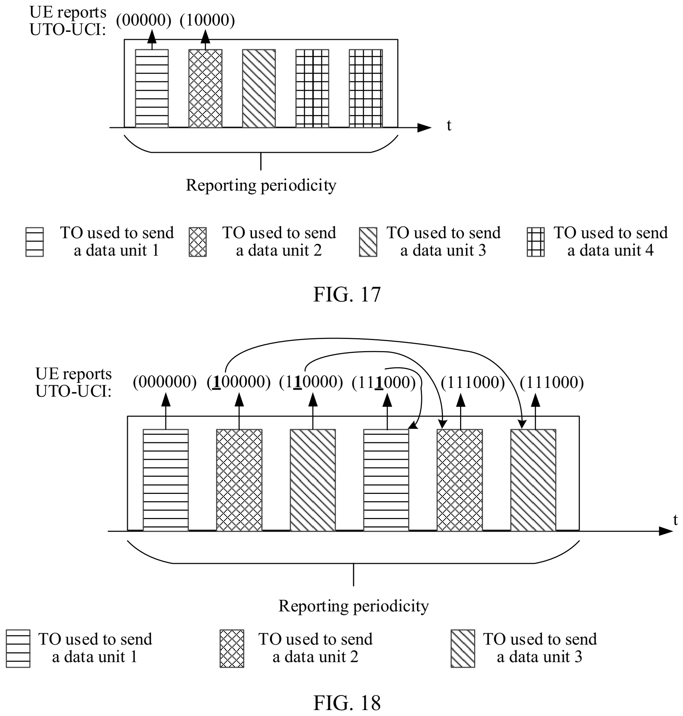

For example, as shown in FIG. 17, an example in which there are five available TOs (P=5) within the reporting periodicity and the second indication information is UTO-UCI is used. The terminal device sequentially sends data units 1, 2, 3, and a data unit 4 twice within the reporting periodicity. The terminal device sends UTO-UCI: 00000 at a 1^{st} available TO within the reporting periodicity, which indicates that send uplink data is sent at the five available TOs within the reporting periodicity. The terminal device sends UTO-UCI: 10000 at a 2^{nd} available TO within the reporting periodicity, where a 1^{st} bit changes from 0 (a value of the 1^{st} bit of the UTO-UCI sent at the 1^{st} available TO) to 1, in other words, the value of the 1^{st} bit is flipped, which indicates that there is repeated sending of a data unit at a last available TO within the reporting periodicity. For example, a data unit 4 is repeatedly sent at the last available TO. In this example, i is 2, and x is 1.

For example, as shown in FIG. 18, an example in which there are six available TOs (P=6) within the reporting periodicity and the second indication information is UTO-UCI is used. The terminal device sequentially sends data units 1, 2, and 3 within the reporting periodicity, and then repeatedly sends the data units 1, 2, and 3. The terminal device sends UTO-UCI: 000000 at a 1^{st} available TO within the reporting periodicity, which indicates that uplink data is sent at the six available TOs within the reporting periodicity. The terminal device sends UTO-UCI: 100000 at a 2^{nd} available TO within the reporting periodicity, where a 1^{st} bit changes from 0 (a value of the 1^{st} bit of the UTO-UCI sent at the 1^{st} available TO) to 1, in other words, the value of the 1^{st} bit is flipped, which indicates that there is repeated sending of a data unit at a last available TO within the reporting periodicity. For example, a data unit 3 is repeatedly sent at the last available TO. The terminal device sends UTO-UCI: 110000 at a 3^{rd} available TO within the reporting periodicity, where a 2^{nd} bit changes from 0 (a value of the 2^{nd} bit of the UTO-UCI sent at the 2^{nd} available TO) to 1, in other words, the value of the 2^{nd} bit is flipped, which indicates that there is repeated sending of a data unit at a last 2^{nd} available TO within the reporting periodicity. For example, a data unit 2 is repeatedly sent at the last 2^{nd} available TO. The terminal device sends UTO-UCI: 111000 at a 4^{th} available TO within the reporting periodicity, where a 3^{rd} bit changes from 0 (a value of the 3^{rd} bit of the UTO-UCI sent at the 3^{rd} available TO) to 1, in other words, the value of the 3^{rd} bit is flipped, which indicates that there is repeated sending of a data unit at a last 3^{rd} available TO within the reporting periodicity. For example, a data unit 1 is repeatedly sent at the last 3^{rd} available TO. In this example, i is 4, and x is 3.

In the foregoing embodiment, whether there is repeated sending of a data unit at a last x^{th} TO within the reporting periodicity is indicated by whether a value of an adjacent bit (for example, an x^{th} bit) previous to a bit corresponding to a current TO in the second indication information reported at the current TO is flipped relative to that of the adjacent bit corresponding to a preceding TO (it is assumed that there is uplink data transmission at the preceding TO).

In a third indication manner, the second indication information includes (Y+m) bits, Y is a positive integer, first Y bits in the (Y+m) bits are used to indicate use statuses of Y available TOs within the reporting periodicity, and last m bits in the (Y+m) bits are used to indicate whether there is repeated sending of a data unit within the reporting periodicity. If the last m bits in the (Y+m) bits are a first value, the second indication information is used to indicate that there is repeated sending of a data unit at the last m available TOs within the reporting periodicity. Herein, m is determined based on a quantity of data units repeatedly sent within a CG periodicity configured in first configuration information, m is an extended bit width, and m is a positive integer. For example, the first value is 1.

In an example, if the reporting periodicity is one CG periodicity, m is equal to a quantity of data units repeatedly sent within the CG periodicity configured in the first configuration information. For example, the network configures repetitionPUSCHsPerCG=lastOne, a data unit repeatedly sent is a last data unit, and m is 1. For another example, the network configures repetitionPUSCHsPerCG=lastTwo, data units repeatedly sent are last two data units, and m is 2.

In an optional embodiment of the third indication manner, Y is a fixed value, and Y=P. For example, refer to a of FIG. 10. Bit lengths of the second indication information (UTO-UCI) sent by the terminal device at different available TOs within one reporting periodicity are a fixed value, and the bit length Y is equal to a quantity of available TOs within the reporting periodicity, for example, P=5. In an example, if the reporting periodicity is one CG periodicity, Y=P=N. In an example, if the reporting periodicity is a CG periodicities, Y=P= a*N.

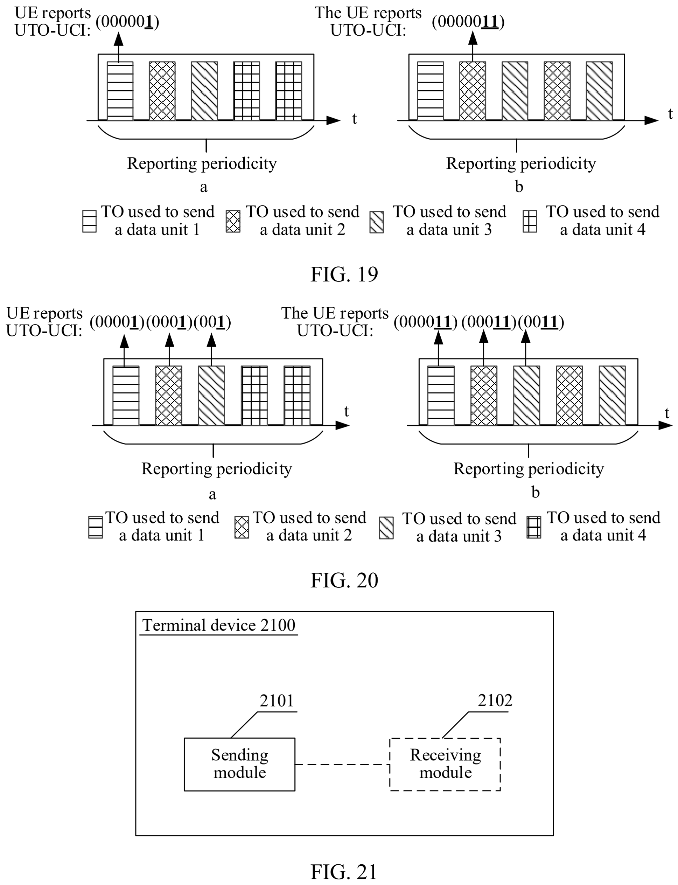

Based on this, the following describes an indication manner of a fixed length in detail with reference to FIG. 19.

For example, as shown in a of FIG. 19, an example in which there are five available TOs (P=5) within the reporting periodicity, the second indication information is UTO-UCI, and m is 1 is used. The terminal device sends the UTO-UCI: 000001 at a 1^{st} available TO within the reporting periodicity, where first five bits are used to indicate use statuses (0 indicates using or sending) of the five available TOs within the reporting periodicity, the last bit is an added bit, and the last bit is used to indicate that there is repeated sending of a data unit at the last available TO within the reporting periodicity. For example, a data unit 4 is repeatedly sent at the last available TO. In some embodiments, the terminal device may send the UTO-UCI: 000001 at each of a 2^{nd} available TO to a 5^{th} available TO within the reporting periodicity (not shown in a of FIG. 19).

For example, as shown in b of FIG. 19, an example in which there are five available TOs (P=5) within the reporting periodicity, the second indication information is UTO-UCI, and m is 2 is used. The terminal device sends the UTO-UCI: 0000011 at a 2^{nd} available TO within the reporting periodicity, where first five bits are used to indicate use statuses (0 indicates using or sending) of the five available TOs within the reporting periodicity, the last two bits are added bits, and the last two bits are used to indicate that there is repeated sending of data units at the last two available TOs within the reporting periodicity. For example, a data unit 2 is repeatedly sent at a 4^{th} available TO, and a data unit 3 is repeatedly sent at a 5^{th} available TO. In some embodiments, the terminal device may send the UTO-UCI: 0000011 at each of a 1^{st} available TO and a 3^{rd} to the 5^{th} available TO within the reporting periodicity (not shown in b of FIG. 19).

In the foregoing embodiment, m bits are added to a tail of a fixed bit, and when the added m bits are a first value, it indicates that the terminal device repeatedly sends data units at last m available TOs within the reporting periodicity.

In an optional embodiment of the third indication manner, Y is a dynamically changed value. For example, as shown in b of FIG. 10, bit lengths of the second indication information (UTO-UCI) sent by the terminal device at different available TOs within one reporting periodicity are different. For example, a bit length of the UTO-UCI sent at the 1^{st} available TO is 3, a bit length of the UTO-UCI sent at the 2^{nd} available TO is 2, and a bit length of the UTO-UCI sent at the 3^{rd} available TO is 1. In other words, the bit length Y is decreasing progressively.

It should be noted that, in this embodiment, Y=P-i-offset, where i indicates a number of a current TO at which the second indication information is sent within the reporting periodicity, offset indicates an offset (refer to b of FIG. 10) between a nearest available TO indicated by the second indication information sent at the current TO and the current available TO, and P indicates a quantity of available TOs within the reporting periodicity. For example, as shown in b of FIG. 10, offset=1, and P=5. If the current TO is a 1^{st} TO, that is, i=1, a quantity of bits of UTO-UCI sent at the 1^{st} TO is Y=5-1-1=3; if the current TO is a 2^{nd} TO, that is, i=2, a quantity of bits of UTO-UCI sent at the 2^{nd} TO is Y=5-2-1=2; and if the current TO is a 3^{rd} TO, that is, i=3, a quantity of bits of UTO-UCI sent at the 3^{rd} TO is Y=5-3-1=1. It can be seen that Y decreases progressively, in other words, a bit length of the second indication information varies.

Based on this, the following describes an indication manner of a variable length in detail with reference to FIG. 20.

For example, as shown in a of FIG. 20, an example in which there are five available TOs (P=5) within the reporting periodicity, the second indication information is UTO-UCI, and m is 1 is used. The terminal device sends the UTO-UCI: 00001 at a 1^{st} available TO within the reporting periodicity, where first four bits are used to indicate use statuses (0 indicates using or sending) of last four available TOs within the reporting periodicity, a last bit is an added bit, and the last bit is used to indicate that there is repeated sending of a data unit at the last available TO within the reporting periodicity. For example, a data unit 4 is repeatedly sent at the last available TO. In some embodiments, the terminal device sends UTO-UCI: 0001 at a 2^{nd} available TO within the reporting periodicity, where first three bits are used to indicate use statuses (0 indicates using or sending) of last three available TOs within the reporting periodicity, a last bit is an added bit, and the last bit is used to indicate that there is repeated sending of a data unit at the last available TO within the reporting periodicity. In some embodiments, the terminal device sends UTO-UCI: 001 at a 3^{rd} available TO within the reporting periodicity, where first two bits are used to indicate use statuses (0 indicates using or sending) of last two available TOs within the reporting periodicity, a last bit is an added bit, and the last bit is used to indicate that there is repeated sending of a data unit at the last available TO within the reporting periodicity.

For example, as shown in b of FIG. 20, an example in which there are five available TOs (P=5) within the reporting periodicity, the second indication information is the UTO-UCI, and m is 2 is used. The terminal device sends the UTO-UCI: 000011 at a 1^{st} available TO within the reporting periodicity, where first four bits are used to indicate use statuses (0 indicates using or sending) of last four available TOs within the reporting periodicity, last two bits are added bits, and the last two bits are used to indicate that there is repeated sending of data units at the last two available TOs within the reporting periodicity. For example, a data unit 2 and a data unit 3 are respectively repeatedly sent at 4^{th} and 5^{th} available TOs. In some embodiments, the terminal device sends UTO-UCI: 00011 at a 2^{nd} available TO within the reporting periodicity, where first three bits are used to indicate use statuses (0 indicates using or sending) of last three available TOs within the reporting periodicity, last two bits are added bits, and the last two bits are used to indicate that there is repeated sending of data units at the last two available TOs within the reporting periodicity. In some embodiments, the terminal device sends UTO-UCI: 0011 at a 3^{rd} available TO within the reporting periodicity, where first two bits are used to indicate use statuses (0 indicates using or sending) of last two available TOs within the reporting periodicity, last two bits are added bits, and the last two bits are used to indicate that there is repeated sending of data units at the last two available TOs within the reporting periodicity.

In the foregoing embodiment, m bits are added to a tail of a dynamically changed bit. When the added m bits are a first value, it indicates that the terminal device repeatedly sends data units at last m available TOs within the reporting periodicity.

In the embodiment shown in FIG. 14, when the terminal device determines to repeatedly send data within the reporting periodicity, the terminal device needs to notify the network device of related information of the repeated sending. For example, the terminal device notifies the network device of repeated sending of a data unit by sending the second indication information. In this way, the network device can learn, based on the second indication information, which available TOs within the reporting periodicity have repeated sending of data and which available TOs have a pair of repeated data units, to jointly decode the data. In addition, the network device can further promptly schedule HARQ retransmission for a data unit that fails to be decoded in data units that are not repeatedly sent, without having to wait for all data units to be transmitted once before scheduling HARQ retransmission. This can improve data transmission efficiency. As shown in a of FIG. 15, the network device learns, based on the UTO-UCI, that the terminal device repeatedly sends the data unit 3 at the 3^{rd} available TO and the 4^{th} available TO. The network device may directly trigger, after receiving the data unit 1 and the data unit 2, HARQ scheduling on, for example, the data unit 2 on which decoding fails, without waiting for transmission of the data unit 3 to be completed.

Based on the foregoing several embodiments, the terminal device may send the second indication information to the network device based on several indication manners.

In a case, the network device may directly learn, based on the second indication information, which data units sent at two TOs within the reporting periodicity are a pair and are repeatedly sent, to perform joint decoding on a plurality of data units within the reporting periodicity, as shown in FIG. 16.

In another case, the network device may learn, based on the second indication information, the configuration information (the first configuration information or the second configuration information), and a repeated sending manner (refer to b, c, or d of FIG. 12) agreed on by the two parties, which data units sent at two TOs within the reporting periodicity are a pair and are repeatedly sent, to perform joint decoding on a plurality of data units within the reporting periodicity, as shown in FIG. 18.

It should be noted that, in FIG. 11, FIG. 13, or FIG. 14, an example in which a network device and a terminal device are used as execution bodies for interaction is used to illustrate the method. However, the execution bodies for interaction are not limited in this application. For example, the network device in FIG. 11, FIG. 13, or FIG. 14 may alternatively be a chip, a chip system, or a processor that supports the network device in implementing the method, and may alternatively be a logical module or software that can implement all or some of functions of the network device. The terminal device in FIG. 11, FIG. 13, or FIG. 14 may be a chip, a chip system, or a processor that supports the terminal device in implementing the method, and may alternatively be a logical module or software that can implement all or some of functions of the terminal device. In some embodiments, the network device may be a radio access network device, for example, a base station.

FIG. 21 is a diagram of a data transmission apparatus according to an embodiment of this application. As shown in FIG. 21, the data transmission apparatus 2100 includes:
a sending module 2101, configured to repeatedly send a first data unit at an available transmission occasion TO within a configured grant CG periodicity, where the first data unit is a last data unit or multiple data units in a plurality of data units continuously sent within the CG periodicity, the CG periodicity includes N available TOs consecutive in time domain, and N is a positive integer greater than 1.

In an optional embodiment, the data unit is a physical uplink shared channel PUSCH.

In an optional embodiment, the data transmission apparatus 2100 further includes: a receiving module 2102, configured to receive configuration information from a network device, where the configuration information is used to configure related information of a data unit repeatedly sent by a terminal device within the CG periodicity.

In an optional embodiment, the configuration information is first configuration information, and the first configuration information includes index information of the data unit repeatedly sent within the CG periodicity, and a quantity of sending times of the data unit repeatedly sent; and the index information is used to indicate the last data unit or the multiple data units.

In an optional embodiment, the sending module 2101 is configured to repeatedly send the first data unit at the available TO within the CG periodicity based on the first configuration information, where the first data unit is the last data unit or the multiple data units configured in the first configuration information.

In an optional embodiment, the configuration information is second configuration information; the second configuration information includes first indication information and a quantity of sending times of the data unit repeatedly sent; and the first indication information is used to indicate that the terminal device is allowed to repeatedly send the data unit within the CG periodicity.

In an optional embodiment, the sending module 2101 is configured to: determine the first data unit based on the quantity of sending times of the data unit repeatedly sent in the second configuration information, to-be-sent data volume within the CG periodicity, and the available TO within the CG periodicity; repeatedly send the first data unit at the available TO within the CG periodicity.

In an optional embodiment, the configuration information is carried in radio resource control RRC.

In an optional embodiment, the sending module 2101 is further configured to send second indication information to the network device, where the second indication information is used to indicate whether there is repeated sending of a data unit within a reporting periodicity.

In an optional embodiment, the sending module 2101 is configured to send the second indication information to the network device at one available TO or a plurality of available TOs within the reporting periodicity.

In an optional embodiment, the sending module 2101 is configured to send the second indication information to the network device at each of the plurality of available TOs within the reporting periodicity.

In an optional embodiment, the second indication information is carried in uplink control information UCI.

In an optional embodiment, the second indication information includes P bits, P is a positive integer greater than 1, and the P bits are used to indicate use statuses of P TOs within the reporting periodicity; and if a last bit or multiple bits in the P bits are a first value, the second indication information is used to indicate that there is repeated sending of a data unit within the reporting periodicity.

In an optional embodiment, the sending module 2101 is configured to send the second indication information to the network device at a first available TO, where the first available TO is an i^{th} available TO within the reporting periodicity, and i is a positive integer greater than 1. The second indication information includes P bits, an i^{th} bit in the P bits is used to indicate a use status of the first available TO, and at least one of first (i-1) bits is used to indicate whether there is repeated sending of a data unit within the reporting periodicity.

In an optional embodiment, an (i-1)^{th} bit in the P bits in the second indication information is used to indicate whether there is repeated sending of a data unit at the first available TO; and if a value of the (i-1)^{th} bit is flipped, the second indication information is used to indicate that there is repeated sending of a data unit at the first available TO.

In an optional embodiment, the first (i-1) bits in the P bits in the second indication information are used to indicate whether there is repeated sending of a data unit at last x available TOs within the reporting periodicity, and x is a positive integer less than or equal to (i-1); and if values of x bits in the first (i-1) bits are flipped, the second indication information is used to indicate that there is repeated sending of a data unit at the last x available TOs within the reporting periodicity.

In an optional embodiment, the second indication information includes (Y+m) bits, Y is a positive integer, and first Y bits in the (Y+m) bits are used to indicate use statuses of Y available TOs within the reporting periodicity; last m bits in the (Y+m) bits are used to indicate whether there is repeated sending of a data unit within the reporting periodicity, m is determined based on a quantity of data units repeatedly sent within the CG periodicity configured in the first configuration information, and m is a positive integer; and if the last m bits in the (Y+m) bits are a first value, the second indication information is used to indicate that there is repeated sending of a data unit at last m available TOs within the reporting periodicity.

In an optional embodiment, the reporting periodicity is one or more CG periodicities; if the reporting periodicity is one CG periodicity, P is equal to N; or if the reporting periodicity is a CG periodicities, P is equal to a*N, and a is a positive integer greater than 1.

In an optional embodiment, the available TO includes a slot and/or a symbol used for uplink data transmission.

The data transmission apparatus provided in this embodiment of this application is configured to implement the technical solutions of the terminal device in the foregoing method embodiment. Implementation principles and technical effects thereof are similar, and details are not described herein again.

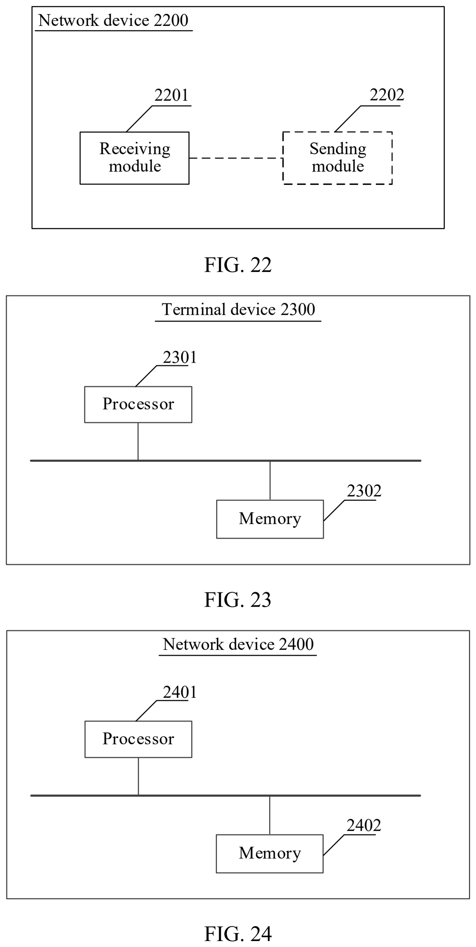

FIG. 22 is a diagram of a data transmission apparatus according to an embodiment of this application. As shown in FIG. 22, the data transmission apparatus 2200 includes:
a receiving module 2201, configured to repeatedly receive a first data unit at an available transmission occasion TO within a configured grant CG periodicity, where the first data unit is a last data unit or multiple data units in a plurality of data units continuously sent by a terminal device within the CG periodicity, the CG periodicity includes N available TOs consecutive in time domain, and N is a positive integer greater than 1.

In an optional embodiment, the data unit is a physical uplink shared channel PUSCH.

In an optional embodiment, the data transmission apparatus 2200 further includes: a sending module 2202, configured to send configuration information to the terminal device, where the configuration information is used to configure related information of a data unit repeatedly sent by the terminal device within the CG periodicity.

In an optional embodiment, the configuration information is first configuration information, and the first configuration information includes index information of the data unit repeatedly sent within the CG periodicity, and a quantity of sending times of the data unit repeatedly sent; and the index information is used to indicate the last data unit or the multiple data units.

In an optional embodiment, the configuration information is second configuration information; the second configuration information includes first indication information and a quantity of sending times of the data unit repeatedly sent; and the first indication information is used to indicate that the terminal device is allowed to repeatedly send the data unit within the CG periodicity.

In an optional embodiment, the configuration information is carried in radio resource control RRC.

In an optional embodiment, the receiving module 2201 is configured to receive second indication information from the terminal device, where the second indication information is used to indicate whether there is repeated sending of a data unit within a reporting periodicity.

In an optional embodiment, the receiving module 2201 is configured to receive the second indication information from the terminal device at one available TO or a plurality of available TOs within the reporting periodicity.

In an optional embodiment, the receiving module 2201 is configured to receive the second indication information from the terminal device at each of the plurality of available TOs within the reporting periodicity.

In an optional embodiment, the second indication information is carried in uplink control information UCI.

In an optional embodiment, the second indication information includes P bits, P is a positive integer greater than 1, and the P bits are used to indicate use statuses of P TOs within the reporting periodicity; and if a last bit or multiple bits in the P bits are a first value, the second indication information is used to indicate that there is repeated sending of a data unit within the reporting periodicity.

In an optional embodiment, the receiving module 2201 is configured to receive the second indication information from the terminal device at a first available TO, where the first available TO is an i^{th} available TO within the reporting periodicity, and i is a positive integer greater than 1. The second indication information includes P bits, an i^{th} bit in the P bits is used to indicate a use status of the first available TO, and at least one of first (i-1) bits is used to indicate whether there is repeated sending of a data unit within the reporting periodicity.

In an optional embodiment, an (i-1)^{th} bit in the P bits in the second indication information is used to indicate whether there is repeated sending of a data unit at the first available TO; and if a value of the (i-1)^{th} bit is flipped, the second indication information is used to indicate that there is repeated sending of a data unit at the first available TO.

In an optional embodiment, the first (i-1) bits in the P bits in the second indication information are used to indicate whether there is repeated sending of a data unit at last x available TOs within the reporting periodicity, and x is a positive integer less than or equal to (i-1); and if values of x bits in the first (i-1) bits are flipped, the second indication information is used to indicate that there is repeated sending of a data unit at the last x available TOs within the reporting periodicity.

In an optional embodiment, the second indication information includes (Y+m) bits, Y is a positive integer, and first Y bits in the (Y+m) bits are used to indicate use statuses of Y available TOs within the reporting periodicity; last m bits in the (Y+m) bits are used to indicate whether there is repeated sending of a data unit within the reporting periodicity, m is determined based on a quantity of data units repeatedly sent within the CG periodicity configured in the first configuration information, and m is a positive integer; and if the last m bits in the (Y+m) bits are a first value, the second indication information is used to indicate that there is repeated sending of a data unit at last m available TOs within the reporting periodicity.

In an optional embodiment, the reporting periodicity is one or more CG periodicities; if the reporting periodicity is one CG periodicity, P is equal to N; or if the reporting periodicity is a CG periodicities, P is equal to a*N, and a is a positive integer greater than 1.

In an optional embodiment, the available TO includes a slot and/or a symbol used for uplink data transmission.

The data transmission apparatus provided in this embodiment of this application is configured to implement the technical solutions of the network device in the foregoing method embodiment. Implementation principles and technical effects thereof are similar, and details are not described herein again.

FIG. 23 is a diagram of a terminal device according to an embodiment of this application. As shown in FIG. 23, the terminal device 2300 includes a processor 2301 and a memory 2302. The memory 2302 stores computer-executable instructions. The processor 2301 executes the computer-executable instructions stored in the memory 2302, to enable the terminal device 2300 to perform the method steps of the terminal device according to any one of the foregoing method embodiments. Implementation principles and technical effects thereof are similar, and details are not described herein again.

FIG. 24 is a diagram of a network device according to an embodiment of this application. As shown in FIG. 24, the network device 2400 includes a processor 2401 and a memory 2402. The memory 2402 stores computer-executable instructions. The processor 2401 executes the computer-executable instructions stored in the memory 2402, to enable the network device to perform the method steps of the network device 2400 according to any one the foregoing method embodiments. Implementation principles and technical effects thereof are similar, and details are not described herein again.

An embodiment of this application provides a communication system, including at least one terminal device and a network device, where the at least one terminal device is communicatively connected to the network device; and the at least one terminal device performs the method steps of the terminal device according to any one of the foregoing method embodiments, and the network device performs the method steps of the network device according to any one of the foregoing method embodiments. Implementation principles and technical effects thereof are similar to those in the related embodiments, and details are not described herein again.

An embodiment of this application provides a computer-readable storage medium. The computer-readable storage medium stores a computer program. When the computer program is executed by a processor, the method steps of the terminal device according to any one of the foregoing method embodiments are implemented. Implementation principles and technical effects thereof are similar to those in the related embodiments, and details are not described herein again.

An embodiment of this application provides a computer-readable storage medium. The computer-readable storage medium stores a computer program. When the computer program is executed by a processor, the method steps of the network device according to any one of the foregoing method embodiments are implemented. Implementation principles and technical effects thereof are similar to those in the related embodiments, and details are not described herein again.

An embodiment of this application provides a computer program product. The computer program product includes a computer program. When the computer program is run, a computer is enabled to perform the method steps of the terminal device according to any one of the foregoing method embodiments. Implementation principles and technical effects thereof are similar to those in the related embodiments, and details are not described herein again.

An embodiment of this application provides a computer program product. The computer program product includes a computer program. When the computer program is run, a computer is enabled to perform the method steps of the network device according to any one of the foregoing method embodiments. Implementation principles and technical effects thereof are similar to those in the related embodiments, and details are not described herein again.

An embodiment of this application provides a chip. The chip includes a processor, and the processor is configured to invoke a computer program in a memory, to perform the method steps of the terminal device according to any one of the foregoing method embodiments. Implementation principles and technical effects thereof are similar to those in the related embodiments, and details are not described herein again.

An embodiment of this application provides a chip. The chip includes a processor, and the processor is configured to invoke a computer program in a memory, to perform the method steps of the network device according to any one of the foregoing method embodiments. Implementation principles and technical effects thereof are similar to those in the related embodiments, and details are not described herein again.

All or some of methods described in the foregoing embodiments may be implemented by using software, hardware, firmware, or any combination thereof. If the methods are implemented in the software, functions may be used as one or more instructions or code and stored in the computer-readable medium or transmitted on the computer-readable medium. The computer-readable medium may include a computer storage medium and a communication medium, and may further include any medium that can transfer a computer program from one place to another. The storage medium may be any target medium that can be accessed by a computer.

The computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in the form of an instruction or a data structure, and may be accessed by a computer. In addition, any connection is appropriately referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. The foregoing combination should also be included in the scope of the computer-readable medium.

Embodiments of this application are described with reference to the flowcharts and/or block diagrams of the method, the device (system), and the computer program product according to embodiments of this application. It should be understood that computer program instructions can implement each procedure and/or block in the flowcharts and/or block diagrams and a combination of procedures and/or blocks in the flowcharts and/or block diagrams. These computer program instructions may be provided for a processing unit of a general-purpose computer, a special-purpose computer, an embedded processor, or any other programmable data processing device to generate a machine, so that the instructions executed by a processing unit of a computer or any other programmable data processing device generate an apparatus for implementing a specific function in one or more procedures in the flowcharts and/or in one or more blocks in the block diagrams.

The foregoing specific implementations further describe in detail the objectives, technical solutions, and beneficial effects of the present invention. It should be understood that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. A data transmission method, applied to a terminal device, wherein the method comprises:
repeatedly sending a first data unit at an available transmission occasion TO within a configured grant CG periodicity, wherein the first data unit is a last data unit or multiple data units in a plurality of data units continuously sent within the CG periodicity, the CG periodicity comprises N available TOs consecutive in time domain, and N is a positive integer greater than 1.

2. The method according to claim 1, wherein the data unit is a physical uplink shared channel PUSCH.

3. The method according to claim 1 or 2, wherein the method further comprises:
receiving configuration information from a network device, wherein the configuration information is used to configure related information of a data unit repeatedly sent by the terminal device within the CG periodicity.

4. The method according to claim 3, wherein the configuration information is first configuration information; the first configuration information comprises index information of the data unit repeatedly sent within the CG periodicity, and a quantity of sending times of the data unit repeatedly sent; and the index information is used to indicate the last data unit or the multiple data units.

5. The method according to any one of claims 1 to 4, wherein the repeatedly sending a first data unit at an available transmission occasion TO within a configured grant CG periodicity comprises:
repeatedly sending the first data unit at the available TO within the CG periodicity based on the first configuration information, wherein the first data unit is the last data unit or the multiple data units configured in the first configuration information.

6. The method according to claim 3, wherein the configuration information is second configuration information; the second configuration information comprises first indication information and a quantity of sending times of the data unit repeatedly sent; and the first indication information is used to indicate that the terminal device is allowed to repeatedly send the data unit within the CG periodicity.

7. The method according to any one of claims 1 to 3 and claim 6, wherein the repeatedly sending a first data unit at an available transmission occasion TO within a configured grant CG periodicity comprises:
determining the first data unit based on the quantity of sending times of the data unit repeatedly sent in the second configuration information, to-be-sent data volume within the CG periodicity, and the available TO within the CG periodicity; and
repeatedly sending the first data unit at the available TO within the CG periodicity.

8. The method according to any one of claims 3 to 7, the configuration information is carried in radio resource control RRC.

9. The method according to any one of claims 1 to 8, wherein the method further comprises:
sending second indication information to the network device, wherein the second indication information is used to indicate whether there is repeated sending of a data unit within a reporting periodicity.

10. The method according to claim 9, wherein
the sending second indication information to the network device comprises: sending the second indication information to the network device at one available TO or a plurality of available TOs within the reporting periodicity.

11. The method according to claim 10, wherein the sending the second indication information to the network device at a plurality of available TOs within the reporting periodicity comprises:
sending the second indication information to the network device at each of the plurality of available TOs within the reporting periodicity.

12. The method according to any one of claims 9 to 11, the second indication information is carried in uplink control information UCI.

13. The method according to any one of claims 9 to 12, wherein the second indication information comprises P bits, P is a positive integer greater than 1, and the P bits are used to indicate use statuses of P available TOs within the reporting periodicity; and
if a last bit or multiple bits in the P bits are a first value, the second indication information is used to indicate that there is repeated sending of a data unit within the reporting periodicity.

14. The method according to any one of claims 9 to 12, wherein
the sending second indication information to the network device comprises:
sending the second indication information to the network device at a first available TO, wherein the first available TO is an i^{th} available TO within the reporting periodicity, and i is a positive integer greater than 1, wherein
the second indication information comprises P bits, an i^{th} bit in the P bits is used to indicate a use status of the first available TO, and at least one of first (i-1) bits is used to indicate whether there is repeated sending of a data unit within the reporting periodicity.

15. The method according to claim 14, wherein an (i-1)^{th} bit in the P bits in the second indication information is used to indicate whether there is repeated sending of a data unit at the first available TO; and
if a value of the (i-1)^{th} bit is flipped, the second indication information is used to indicate that there is repeated sending of a data unit at the first available TO.

16. The method according to claim 14, wherein the first (i-1) bits in the P bits in the second indication information are used to indicate whether there is repeated sending of a data unit at last x available TOs within the reporting periodicity, and x is a positive integer less than or equal to (i-1); and
if values of x bits in the first (i-1) bits are flipped, the second indication information is used to indicate that there is repeated sending of a data unit at the last x available TOs within the reporting periodicity.

17. The method according to any one of claims 9 to 12, wherein
the second indication information comprises (Y+m) bits, Y is a positive integer, and first Y bits in the (Y+m) bits are used to indicate use statuses of Y available TOs within the reporting periodicity; and last m bits in the (Y+m) bits are used to indicate whether there is repeated sending of a data unit within the reporting periodicity, m is determined based on a quantity of data units repeatedly sent within the CG periodicity configured in the first configuration information, and m is a positive integer; and
if the last m bits in the (Y+m) bits are a first value, the second indication information is used to indicate that there is repeated sending of a data unit at last m available TOs within the reporting periodicity.

18. The method according to any one of claims 9 to 17, wherein the reporting periodicity is one or more CG periodicities; and
if the reporting periodicity is one CG periodicity, P is equal to N; or
if the reporting periodicity is a CG periodicities, P is equal to a*N, and a is a positive integer greater than 1.

19. The method according to any one of claims 1 to 18, wherein the available TO comprises a slot and/or a symbol used for uplink data transmission.

20. A data transmission method, applied to a network device, wherein the method comprises:
repeatedly receiving a first data unit at an available transmission occasion TO within a configured grant CG periodicity, wherein the first data unit is a last data unit or multiple data units in a plurality of data units continuously sent by a terminal device within the CG periodicity, the CG periodicity comprises N available TOs consecutive in time domain, and N is a positive integer greater than 1.

21. The method according to claim 20, wherein the data unit is a physical uplink shared channel PUSCH.

22. The method according to claim 20 or 21, wherein the method further comprises:
sending configuration information to the terminal device, wherein the configuration information is used to configure related information of a data unit repeatedly sent by the terminal device within the CG periodicity.

23. The method according to claim 22, wherein the configuration information is first configuration information; the first configuration information comprises index information of the data unit repeatedly sent within the CG periodicity, and a quantity of sending times of the data unit repeatedly sent; and the index information is used to indicate the last data unit or the multiple data units.

24. The method according to claim 22, wherein the configuration information is second configuration information; the second configuration information comprises first indication information and a quantity of sending times of the data unit repeatedly sent; and the first indication information is used to indicate that the terminal device is allowed to repeatedly send the data unit within the CG periodicity.

25. The method according to any one of claims 22 to 24, the configuration information is carried in radio resource control RRC.

26. The method according to any one of claims 20 to 25, wherein the method further comprises:
receiving second indication information from the terminal device, wherein the second indication information is used to indicate whether there is repeated sending of a data unit within a reporting periodicity.

27. The method according to claim 26, wherein
the receiving second indication information from the terminal device comprises: receiving the second indication information from the terminal device at one available TO or a plurality of available TOs within the reporting periodicity.

28. The method according to claim 27, wherein the receiving the second indication information from the terminal device at one available TO or a plurality of available TOs within the reporting periodicity comprises:
receiving the second indication information from the terminal device at each of the plurality of available TOs within the reporting periodicity.

29. The method according to any one of claims 26 to 28, the second indication information is carried in uplink control information UCI.

30. The method according to any one of claims 26 to 29, wherein the second indication information comprises P bits, P is a positive integer greater than 1, and the P bits are used to indicate use statuses of P available TOs within the reporting periodicity; and
if a last bit or multiple bits in the P bits are a first value, the second indication information is used to indicate that there is repeated sending of a data unit within the reporting periodicity.

31. The method according to any one of claims 26 to 29, wherein the receiving second indication information from the terminal device comprises:
receiving the second indication information from the terminal device at a first available TO, wherein the first available TO is an i^{th} available TO within the reporting periodicity, and i is a positive integer greater than 1, wherein
the second indication information comprises P bits, an i^{th} bit in the P bits is used to indicate a use status of the first available TO, and at least one of first (i-1) bits is used to indicate whether there is repeated sending of a data unit within the reporting periodicity.

32. The method according to claim 31, wherein an (i-1)^{th} bit in the P bits in the second indication information is used to indicate whether there is repeated sending of a data unit at the first available TO; and
if a value of the (i-1)^{th} bit is flipped, the second indication information is used to indicate that there is repeated sending of a data unit at the first available TO.

33. The method according to claim 31, wherein the first (i-1) bits in the P bits in the second indication information are used to indicate whether there is repeated sending of a data unit at last x available TOs within the reporting periodicity, and x is a positive integer less than or equal to (i-1); and
if values of x bits in the first (i-1) bits are flipped, the second indication information is used to indicate that there is repeated sending of a data unit at the last x available TOs within the reporting periodicity.

34. The method according to any one of claims 26 to 29, wherein
the second indication information comprises (Y+m) bits, Y is a positive integer, and first Y bits in the (Y+m) bits are used to indicate use statuses of Y available TOs within the reporting periodicity; and last m bits in the (Y+m) bits are used to indicate whether there is repeated sending of a data unit within the reporting periodicity, m is determined based on a quantity of data units repeatedly sent within the CG periodicity configured in the first configuration information, and m is a positive integer; and
if the last m bits in the (Y+m) bits are a first value, the second indication information is used to indicate that there is repeated sending of a data unit at last m available TOs within the reporting periodicity.

35. The method according to any one of claims 26 to 34, wherein the reporting periodicity is one or more CG periodicities; and
if the reporting periodicity is one CG periodicity, P is equal to N; or
if the reporting periodicity is a CG periodicities, P is equal to a*N, and a is a positive integer greater than 1.

36. The method according to any one of claims 20 to 35, wherein the available TO comprises a slot and/or a symbol used for uplink data transmission.

37. A data transmission apparatus, comprising:
a sending module, configured to repeatedly send a first data unit at an available transmission occasion TO within a configured grant CG periodicity, wherein the first data unit is a last data unit or multiple data units in a plurality of data units continuously sent within the CG periodicity, the CG periodicity comprises N available TOs consecutive in time domain, and N is a positive integer greater than 1.

38. A data transmission apparatus, comprising:
a receiving module, configured to repeatedly receive a first data unit at an available transmission occasion TO within a configured grant CG periodicity, wherein the first data unit is a last data unit or multiple data units in a plurality of data units continuously sent by a terminal device within the CG periodicity, the CG periodicity comprises N available TOs consecutive in time domain, and N is a positive integer greater than 1.

39. A terminal device, comprising a processor and a memory, wherein
the memory stores computer-executable instructions; and
the processor executes the computer-executable instructions stored in the memory, to enable the terminal device to perform the method according to any one of claims 1 to 19.

40. A network device, comprising a processor and a memory, wherein
the memory stores computer-executable instructions; and
the processor executes the computer-executable instructions stored in the memory, to enable the network device to perform the method according to any one of claims 20 to 36.

41. A communication system, comprising at least one terminal device and a network device, wherein the at least one terminal device is communicatively connected to the network device; and
the at least one terminal device performs the method according to any one of claims 1 to 19, and the network device performs the method according to any one of claims 20 to 36.

42. A computer-readable storage medium, wherein the computer-readable storage medium stores a computer program, and the computer program, when executed by a processor, implements the method according to any one of claims 1 to 19 or the method according to any one of claims 20 to 36.
